# EUROPEAN PATENT SPECIFICATION

(11) **EP 2 028 949 B1**
(45) Date of publication and mention of the grant of the patent: **17.08.2016**
(21) Application number: 07755835.1
(22) Date of filing: 23.04.2007
(51) Int. Cl.: A23G 3/54, A23G 4/20, A23G 3/34, A23G 4/06

(54) **COATING COMPOSITIONS, CONFECTIONERY AND CHEWING GUM COMPOSITIONS AND METHODS**
BESCHICHTUNGSZUSAMMENSETZUNGEN, KONFEKT- UND KAUGUMMIZUSAMMENSETZUNGEN SOWIE VERFAHREN
COMPOSITIONS D'ENROBAGE, PROCEDES ET COMPOSITIONS POUR SUCRERIE ET GOMME A MACHER

(30) Priority: 21.04.2006 US 793779 P; 02.06.2006 US 810596 P; 15.12.2006 US 875201 P
(43) Date of publication of application: 04.03.2009
(73) Proprietor: Intercontinental Great Brands LLC, East Hanover, NJ 07936 (US)
(72) Inventor: PERSHAD, Ongkar, Yonkers, NY 10701 (US); WATSON, Deborah, L., Haskell, NJ 07420 (US); O'NEILL, Simone, A., Wayne, NJ 07470 (US); BENOIT, Yannick, F-78660 Prunay-en-Yvelines (FR); SAUDEMONT, Jose, F-62490 Sailly-en-Ostrevent (FR); LAGACHE, Sylvie, F-59700 Marcq-en-Baroeul (FR); LIEVEN, Jean-michel, F-59263 Houplin Ancoisne (FR); KRUSH, Laura, Hoboken, NJ 07030 (US); MISTRY, Atul, Branchburg, NJ 08876 (US); SHRIVASTAVA, Deepti, New York, NJ 10012 (US); COSTELLO, Padraig, Birmingham B30 2LB (GB); JARRARD, Mark, Jr., Morris Plains, NJ 07950 (US); HILLER, Matthew, Douglas, Rockaway, NJ 07866 (US)
(74) Representative: Wilson Gunn
(86) International application number: PCT/US2007/009719
(87) International publication number: WO 2007/124093

(56) References cited:
- EP-A2- 0 446 170
- WO-A-02/47489
- WO-A-98/53705
- WO-A-99/44436
- WO-A-2004/068965
- WO-A-2006/127067
- WO-A-2006/127277
- US-A1- 2004 175 489
- US-B1- 6 235 318

## Description

### FIELD

The present invention is directed generally to coating compositions and products containing the same. More particularly, the present invention relates to coating compositions including an acid blend or coating compositions in particulate form including at least one encapsulated ingredient.

### BACKGROUND

Coatings may be added to confectionery and chewing gum compositions in order to provide additional colors, flavors, and textures. One desirable coating includes an acidic component which provides a sour taste upon consumption. Such a coating may be present in a solid or particulate coating.

WO 98/53705 describes a method for the production of a food acid, including the steps of combining fumaric acid with an organic acidic material in an aqueous medium to produce a mixture and drying the mixture to produce a food acid comprising a particulate material containing fumaric acid and the organic acidic material, the quantity of fumaric acid and the quantity of the organic acidic material being so that the fumaric acid makes up between about 5% and 95% of the particulate material.

In order to provide a desired sour taste citric acid has typically been used to provide the tartness perception. However, when a very strong sour perception is desired, a significant increase in the amount of citric acid must be included. It would be desirable to provide a suitably strong sour perception by the inclusion of different acidic components.

Coatings in particulate form may be applied to the surface of confectioneries such as gummy candies and chewy candies in order to provide additional colors, flavors, sensates, functions, and textures. In such confectioneries, moisture migration may limit consumer acceptability. It would be desirable to provide a coating composition with improved resistance to moisture migration.

There is a need, therefore, for coating compositions and products including the same, which provide suitably strong sour perception by the inclusion of different acidic components, and which provide improved resistance to moisture migration.

### SUMMARY

There is provided a coating composition comprising: 2.5-13% lactic acid, 1.5-9% tartaric acid and 0.05-2% fumaric acid by weight of the coating composition.

In some embodiments there is provided a coating composition including at least one encapsulated ingredient where the coating composition is in particulate form.

In some embodiments, there is provided a method of making a confectionery composition including the steps of: providing a confectionery base composition; forming the confectionery base composition into a shape having an exterior surface; providing a coating composition, where the coating includes a coating composition comprising: 2.5-13% lactic acid, 1.5-9% tartaric acid and 0.05-2% fumaric acid by weight of the coating composition, and applying the coating composition to the exterior surface of the shaped confectionery base composition.

### DETAILED DESCRIPTION

A coating is provided which comprises 2.5-13% lactic acid, 1.5-9% tartaric acid and 0,05-2% fumaric acid by weight of the coating composition. One advantage of the acid blend is that is provides a significantly more tart or sour perception to a consumer as compared to an equivalent amount of citric acid. In some embodiments a particulate coating is provided which includes at least one encapsulated ingredient. The coating compositions may be used in combination with a variety of confectionery or chewing gum products. The confectionery compositions may include, but are not limited to, starch-based jelly candy, gelatin based jelly candy (also known as gummy candy), pectin based jelly candy (also known as jelly candy), carrageenan based jelly candy, hard candies, lozenges as well as other chewy candies such as marshmallows, taffies, caramels and licorice. The chewing gum compositions may include any form of chewing gum, such as, slab, pellet, sticks, center-fill gums, bubble gums, candy gums, multi-region gums, and multi-layer gums.

The acids includes lactic acid, which may also be present as calcium lactate or a blend of lactic acid with calcium lactate. Also included in the acids are tartaric acid and fumaric acid. The acids provide a more intense sour perception than an equivalent amount of citric acid. If desired, citric acid and other components may also be included. Each of the acid components may be present in any amount to provide the desired taste. Lactic acid is present in an amount from 2.5% to 13% or more specifically from 2.75% to 12% by weight of the coating composition, tartaric acid is present in an amount from 1.5% to 9%, or more specifically from 1.75 to 8% by weight of the acid blend, and fumaric acid is present in an amount from 0.05% to 2%, or more specifically from 0.1% to 1.2% by weight of the coating composition.

The acids may be combined with sugars, polyols, or combinations of sugars and polyols to provide the acidic particulate coating. The sugar/polyol component may be used in any desired amount to provide a 100% total weight in combination with the acid blend. Specifically, sugar/polyol may be used in an amount from about 85% to about 90% by weight of the acidic particulate coating. Additionally, the sugar/polyol component may be provided in any suitable particle size and/or particle size distribution to create a desired texture.

The term "confection", or "confectionery" or "confectionery base" may include any conventional confectionery composition, such as gummy candy or "gummi" confections (gummy candy includes a hydrocolloid texturizing agent such as gelatin alone or in combination with other texturizing agents). Also included in those chewable forms are soft candies such as, but not limited to, gum drops, licorice, fruit snacks, starch based jellies, gelatin based jellies, pectin based jellies, carageenan based jellies, agar based jellies, konjac based jellies, chewy candy, starch candy, nougat, toffee, taffy, marshmallow, fondant, fudge, chocolate, compound coating, carob coating, caramel, compressed tablets, candy floss (also known as cotton candy), marzipan, hard boiled candy, nut brittles, pastilles, pralines, nonpareils, dragees, lozenges, sugared nuts, comfits, aniseed balls, nougatine, and jelly beans. Also included in those chewable forms are chewing gums including bubble gums. The basis of gummy confections is generally a sugar/glucose syrup or a polyol/polyol syrup or sugar/polyol combination and a gelatinizing agent, the latter of which may be gelatin, agar, gum arabic, maltodextrin, pectin, carageenan, konjac, modified starches or combinations thereof. Various other gums (also referred to as hydrocolloids) may also be used. The gelatinizing material may be desirably dissolved in water or otherwise hydrated prior to mixing with the sugar/glucose syrup combination. If a hydrocolloid such as pectin is used as the gelatinizing agent, then the pectin is desirably dry mixed with a portion of the sugar or bulk sweetener prior to addition of the dry mixture to water.

As used herein, the term "gum region" or "confectionery region" refers to a region of a center-fill gum or confectionery product, respectively, that may be adjacent to or at least partially surrounding the center-fill, or innermost, region. In some embodiments, the gum region or confectionery region is an intermediate region.

As used herein, the term "center-fill" refers to the innermost region of a center-fill gum or confectionery product. The term "center-fill" does not necessarily imply symmetry of a gum or confectionery product, only that the "center-fill" is within another region of the product. In some embodiments, the center-fill may be substantially symmetric and in others, the center-fill may not be symmetric of the chewing gum or confectionery piece. In some embodiments, more than one center-fill may be present. A center-fill may include solid, liquid, gas and mixtures thereof. The term "liquid" in the context of a center-fill includes fluid materials as well as semi-solid or gel materials. The center-fill can be aqueous, non-aqueous, or an emulsion.

As used herein, the terms "coating" or "coating region" are used to refer to the outermost region of a center-fill gum or confectionery product. In some embodiments, the coating may be amorphous or crystalline and it may be continuous or particulate. Particulate coatings may be referred to as sanding compositions or dusting compositions. Confections with such particulate coatings may be referred to as sanded or dusted.

As used herein, the terms "surround," "surrounding," and the like are not limited to encircling. These terms may refer to enclosing or confining on all sides, encircling or enveloping, and are not limited to symmetrical or identical thicknesses for a region in a center-fill gum or confectionery product.

The transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

Encapsulating material for encapsulating the encapsulated ingredient includes any one or more water soluble or water insoluble polymers, co-polymers, or other materials capable of forming a coating, shell, or film as a protective barrier or layer around one or more ingredients and/or capable of forming a matrix with the one or more ingredients. In some embodiments, the encapsulating material may completely surround, coat, cover, or enclose an ingredient. In other embodiments, the encapsulating material may only partially surround, coat, cover, or enclose an ingredient.

### Coating Composition

The coating composition may include any conventional ingredient such as, but not limited to, sweeteners, flavors, sensates, functional ingredients, and food acids. In some embodiments, the coating composition may be in particulate form, crystalline form, or amorphous form. In some embodiments, the coating composition may be continuous or discontinuous. In some embodiments, the coating may completely surround, coat, cover, or enclose a confectionery base. In other embodiments, the coating may only partially surround, coat, cover, or enclose a confectionery base.

The selection of the form of the coating composition may depend on the desired texture of the confectionery composition.

The coating composition may include one or more sweeteners, and/or one or more flavors, and/or one or more sensates, and/or one or more salts, and/or one or more functional ingredients, and/or one or more food acids. In some embodiments, the one or more sweeteners, and/or one or more flavors, and/or one or more sensates, and/or one or more functional ingredients, and/or one or more food acids may be encapsulated, unencapsulated (or "free") or a combination of encapsulated and unencapsulated.

The coating composition may be in particulate form and may include one or more sweeteners, and/or one or more flavors, and/or one or more sensates, and/or one or more salts, and/or one or more functional ingredients, and/or one or more food acid materials with similar particle sizes such that if they are mixed together, they form a homogeneous blend.

The application of a particulate coating to the exterior of a candy piece may be accomplished by using moisture such as by steam treating the candy piece and then applying the particulate coating in a tumbling operation. In some embodiments, the application of a particulate coating to the exterior of a candy piece may be accomplished by wetting the surface of the candy piece through the application of a liquid prior to application of the particulate coating. The liquid used to wet the surface of the candy piece may be aqueous, non-aqueous, or a combination. In some embodiments, the particulate coating may be embedded into the surface of the confection while in other embodiments, the particulate adheres to the confection without being embedded. This process of surface treatment may also be known as sanding.

The coating composition may adhere to the surface of the confection due to electrostatic adhesion. In some embodiments, application of the particulate coating may be accomplished by physical contact between the surface or surfaces of the confection and the particulate coating without wetting the surface(s) of the confection and with subsequent removal of the excess particulates. In some embodiments, excess particulate coating may be removed from the surface of the confection by applying vacuum, by brushing, and by other like processes. This process may also be known as dusting.

In embodiments where the coating may be in particulate form, the food acid or flavor or sensate or sweetener or salt or functional ingredient materials may be present in an amount from about 0.05% w/w to about 20% w/w, preferably from about 5% w/w to about 15% w/w of the coating composition.

In some embodiments, the coating may also include a saccharide or polyol or a combination of saccharide and polyol. Suitable saccharides may include, but are not limited to, mono-saccharides, di-saccharides and poly-saccharides such as but not limited to, sucrose (sugar), dextrose, maltose, dextrin, xylose, ribose, glucose, mannose, galactose, sucromalt, fructose (levulose), invert sugar, corn syrups, maltodextrins, fructo oligo saccharide syrups, partially hydrolyzed starch, corn syrup solids, polydextrose, soluble fibers, insoluble fibers, and mixtures thereof.

Suitable polyols may include, but are not limited to sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysates, maltitol syrups, and mixtures thereof.

Suitable hydrogenated starch hydrolysates include those disclosed in U.S. Pat. No., 4,279,931 and various hydrogenated glucose syrups and/or powders which contain sorbitol, hydrogenated di saccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Polyols, Inc. of New Castle, Delaware, are also useful.

The coating with the saccharides and/or polyols is in particulate form.

In some embodiments, the coating composition may be in particulate form and may include encapsulated ingredients as described below.

Where the coating composition is in crystalline or amorphous form, the coating may be created by any conventional method known in the coating art. Such methods may include, but are not limited to, hard panning, soft panning, enrobing, spray coating, lamination, co-extrusion, multiple-extrusion, drum sanding, thin film depositing, and the like. As with the particulate coating compositions, crystalline or amorphous coating compositions may include sweeteners and food acids and may be created to provide sour taste intensities equivalent to 0.2 % w/w solution of citric and/ or a sour taste intensity of at least 4 on a scale from 0 to 10.

The coating composition may be included in the confectionery composition in amounts from about 1 percent by weight of the total composition to about 75 percent of the total composition. In some embodiments, the coating composition may be included in the coated center-filled gummy candy composition in amounts from about 5 percent by weight of the total composition to about 15 percent by weight of the total composition.

Center-filled gummy candy confectionery products may include an acidic particulate coating. The moisture content of a center-filled gummy candy can be greater than the moisture content of a gummy candy without a center-filling. In some embodiments, the higher moisture content of a center-filled gummy candy creates a need for a coating that will not pull moisture out of the gummy candy. A coating can be in a particulate form that at least partially covers the center-filled gummy candy. Partially or completely encapsulating an ingredient used in a confectionery composition with an encapsulating material may stabilize the ingredient against moisture absorption and/or moisture migration.

### Encapsulation

One or more ingredients may be encapsulated with an encapsulating material. Partially or completely encapsulating an ingredient used in an confectionery composition with an encapsulating material may delay release of the ingredient during consumption of the confectionery composition, thereby delaying when the ingredient becomes available inside the consumer's mouth, throat, and/or stomach, available to react or mix with another ingredient, and/or available to provide some sensory experience and/or functional or therapeutic benefit. This may be particularly true when the ingredient is water soluble or at least partially water soluble.

Partially or completely encapsulating an ingredient used in a confectionery composition with an encapsulating material may stabilize the ingredient against moisture absorption and/or moisture migration.

A material used to encapsulate an ingredient may include water insoluble polymers, co-polymers, or other materials capable of forming a matrix, solid coating, or film as a protective barrier with or for the ingredient. In some embodiments, the encapsulating material may completely surround, coat, cover, or enclose an ingredient. In other embodiments, the encapsulating material may only partially surround, coat, cover, or enclose an ingredient. Different encapsulating materials may provide different release rates or release profiles or protective barriers for the encapsulated ingredient. In some embodiments, encapsulating material may include one or more of the following: polyvinyl acetate, polyethylene, crosslinked polyvinyl pyrrolidone, polymethylmethacrylate, polylactic acid, polyhydroxyalkanoates, ethylcellulose, polyvinyl acetatephthalate, polyethylene glycol esters, methacrylicacid-co-methylmethacrylate, ethylene-vinylacetate (EVA) copolymer, and the like, and combinations thereof.

The encapsulating material may include fats, waxes, gelatins, hydrocolloids, or oils and may include one or more of the following: hydrogenated cottonseed oil, hydrogenated palm kernel oil, hydrogenated corn oil, hydrogenated soy bean oil, cocoa butter, hydrogenated vegetable oil, bees wax, and the like, and combinations thereof.

The encapsulating material may have a melting point from about 45°C to about 70°C. In still other embodiments, the encapsulating material may have a melting point from about 50°C to about 65°C.

The encapsulating material may be water soluble or water miscible. In such embodiments, the encapsulating material may include, but is not limited to, hydrocolloids such as starch, gum arabic, maltodextrin, dextrins, and the like, and combinations thereof.

An ingredient may be pre-treated prior to encapsulation with an encapsulating material. For example, an ingredient may be coated with a "coating material" that is not miscible with the ingredient or is at least less miscible with the ingredient relative to the ingredient's miscibility with the encapsulating material.

The same or different encapsulating material may be used to individually encapsulate different ingredients in the same confectionery composition. In some embodiments, the same or different methods of encapsulation may be used to individually encapsulate different ingredients in the same confectionery composition.

For example, aspartame may be encapsulated by polyvinyl acetate by using an extrusion method. Separately ace-k may be encapsulated by polyvinyl acetate by using an extrusion method. Both encapsulations may be used as ingredients in the same chewing gum or in other confectionery compositions. For addition examples, see U.S. Patent 8,591,974 entitled "A Delivery System for Active Components as Part of an edible Composition" and filed May 23, 2005.

Malic acid may be encapsulated by hydrogenated cottonseed oil using a spray chilling method and tartaric acid may be encapsulated by hydrogenated cottonseed oil using a spray chilling method. Both encapsulations may be used in the same confectionery composition or chewing gum.

Different encapsulation materials may be used to individually encapsulate different ingredients used in the same confectionery composition. For example, aspartame may be encapsulated by polyvinyl acetate using an extrusion method. Another encapsulation may include ace-k encapsulated by EVA using an extrusion method. Both encapsulations may be used as ingredients in the same chewing gum or other confectionery compositions.

Citric acid may be encapsulated in hydrogenated soy bean oil using a spray chilling method while lactic acid may be encapsulated in gum arabic using a spray drying method. Both encapsulations may then be used in the same confectionery or chewing gum composition.

Different ingredients may be blended and then encapsulated together. For example, aspartame may be mixed with ace-k and then encapsulated together in polyvinyl acetate by an extrusion method. In other embodiments, malic acid may be blended with tartaric acid and then encapsulated together in hydrogenated vegetable oil by a spray chilling method.

### Methods of Encapsulation

There are many way to encapsulate one or more ingredients with an encapsulating material. For example, in some embodiments, a sigma blade or Banbury™ type mixer may be used. In other embodiments, an extruder or other type of continuous mixer may be used. In some embodiments, spray coating, spray chilling, absorption, adsorption, inclusion complexing (e.g., creating a flavor/cyclodextrin complex, forming a glassy matrix, etc.), coacervation, fluidized bed coating, melt spinning, or other process may be used to encapsulate an ingredient with an encapsulating material.

Examples of encapsulation of ingredients may be found in U.S. Patent Publication US 2006/0177383, and entitled "Stable Tooth Whitening Gum with Reactive Components. Further encapsulation techniques and resulting delivery systems may be found in U.S. Patent Nos. 6,770,308, 6,759,066, 6,692,778, 6,592,912, 6,586,023, 6,555,145, 6,479,071, 6,472,000, 6,444,241, 6,365,209, 6,174,514, 5,693,334, 4,711,784, 4,816,265 and 4,384,004.

An encapsulation may be sized to a particular size for use as an ingredient in a confectionery composition. For example in some embodiments, an ingredient may have a particle size of 710, 420, 250, 200, 100, 60, 50 or 25 microns. In some embodiments, the encapsulation may have an average particle size such as, for example 710, 420, 250, 200, 100, 60, 50 or 25 microns. In some embodiments, the encapsulation may have a maximum particle size such as, for example, 710, 420, 250, 200, 100, 60, 50 or 25 microns. The ultimate particle size will depend on the characteristics of the encapsulation and/or the confectionery composition and as such, other sizes are possible in other embodiments. For example, encapsulations and/or confectionery compositions with smooth creamy textures require smaller particles sizes (below 25 microns) while in other examples, encapsulations and/or confectionery compositions with rough textures require larger particle sizes (above 25 microns). In some embodiments, the particle size distribution may have a narrow range resulting in a sharp distribution. In some embodiments, the particle size distribution may have a wide range resulting in a smooth distribution.

### Ingredients

### Sweeteners:

Sweeteners may include sugars, sugarless bulk sweeteners, or the like, high intensity sweeteners, or mixtures thereof. Bulk sweeteners generally are present in amounts of about 5% to about 99% by weight of the confectionery base composition. Suitable sugar sweeteners generally include mono-saccharides, di-saccharides and poly-saccharides such as but not limited to, sucrose (sugar), dextrose, maltose, dextrin, xylose, ribose, glucose, mannose, galactose, fructose, (levulose), invert sugar, corn syrups, maltodextrins, fructo oligo saccharide syrups, partially hydrolysed starch, corn syrup solids and mixtures thereon,

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysates, maltitol syrups, and mixtures thereof

Suitable hydrogenated starch hydrolysates include those disclosed in U.S. Pat. No., 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Polyols, Inc. of New Castle, Delaware, are also useful.

High-intensity sweeteners also may be included as sweetening agents in the composition. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1, 2, 3-oxathiazine-4-one-2,2 -dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl-L-phenylalanine-1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-1-(cyclohexen) alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro-1',6'-dideoxysucrose; 4-chloro-4-deoxy-alpha-D-galacto-pyranosyl-1,6-dichloro-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6',-trichloro-6, 1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro-4,6,1',6'-tetradeoxygalacto-sucrose; and 4,6,1',6'-tetradeoxy-sucrose, and mixtures thereof;
(e) protein based sweeteners such as thaumatococcus danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo" or "Lo han quo").

Hydrophobic sweeteners such as those disclosed in U.S. Pat. No. 7,025,999, and mixtures thereof, may be used. For example, such hydrophobic sweeteners include those of the formulae I-XI as set forth below: 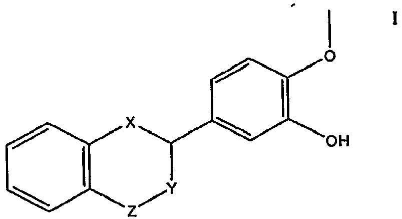
wherein X, Y and Z are selected from the group consisting of CH₂, O and S; 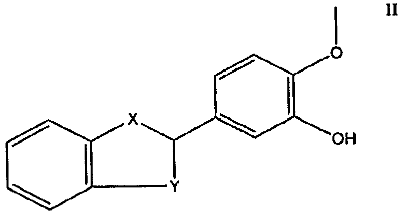
wherein X and Y are selected from the group consisting of S and O; 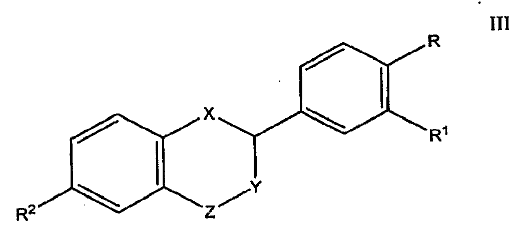
wherein X is S or O; Y is O or CH₂; Z is CH₂, SO₂ or S; R is OCH₃, OH or H; R¹ is SH or OH and R² is H or OH; 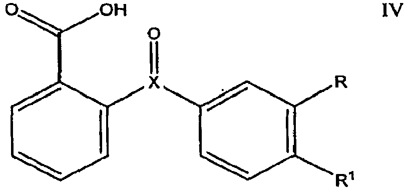
wherein X is C or S; R is OH or H and R¹ is OCH₃ or OH; 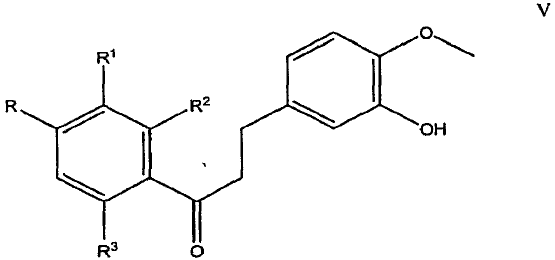
wherein R, R² and R³ are OH or H and R¹ is H or COOH; 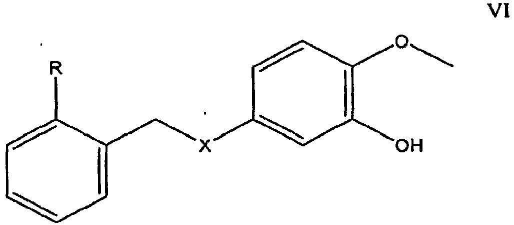
wherein X is O or CH₂ and R is COOH or H; 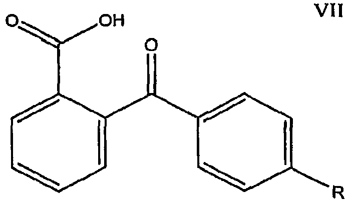
wherein R is CH₃CH₂, OH, N (CH3)₂ or Cl; 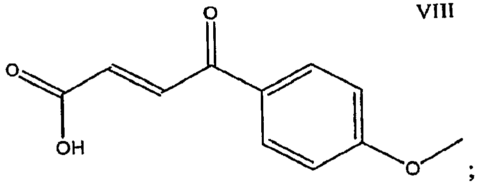 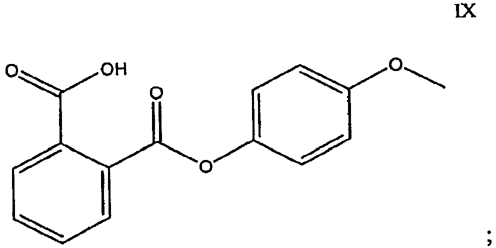 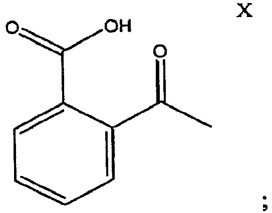
and

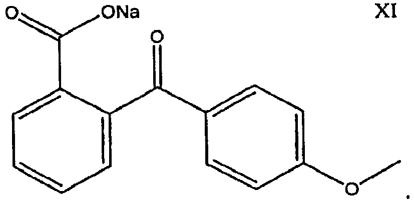

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K).

The sweetener may be a polyol. Polyols may include, but are not limited to glycerol, sorbitol, maltitol, maltitol syrup, mannitol, isomalt, erythritol, xylitol, hydrogenated starch hydrolysates, polyglycitol syrups, polyglycitol powders, lactitol, and combinations thereof.

The active component (e.g., sweetener), which is part of the delivery system, may be used in amounts necessary to impart the desired effect associated with use of the active component (e.g., sweetness). In general, an effective amount of intense sweetener may be utilized to provide the level of sweetness desired, and this amount may vary with the sweetener selected. The intense sweetener may be present in amounts from about 0.001% to about 3%, by weight of the composition, depending upon the sweetener or combination of sweeteners used. The exact range of amounts for each type of sweetener may be selected by those skilled in the art.

In general, an effective amount of intense sweetener may be utilized to provide the level of sweetness desired, and this amount may vary with the sweetener selected. The intense sweetener may be present in amounts from about 0.001% to about 3%, by weight of the total composition, depending upon the sweetener or combination of sweeteners used. The exact range of amounts for each type of sweetener may be selected by those skilled in the art.

When a high intensity sweetener is included, the sweetener may be sucralose, saccharin salts, acesulfame potassium, aspartame, thaumatin, monatin (2-hydroxy-2-(indol-3-ylmethyl)-4-amino glutaric acid), neotame, alitame, and combinations thereof.

### Flavors (including flavor potentiators):

Flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors whose release profiles may be managed include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

Other flavorings including aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, melonal (melon), 2,6-dimethyloctanal (green fruit), and 2-dodecenal (citrus, mandarin), cherry, grape, blueberry, blackberry, strawberry shortcake, and mixtures thereof.

Flavoring agents are used at levels that provide a perceptible sensory experience, i.e. at or above their threshold levels. In other embodiments, flavoring agents are used at levels below their threshold levels such that they do not provide an independent perceptible sensory experience. At subthreshold levels, the flavoring agents may provide an ancillary benefit such as flavor enhancement or potentiation.

A flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

The flavoring agents may be used in many distinct physical forms. Without being limited thereto, such physical forms include free forms, such as spray dried, powdered, beaded forms, encapsulated forms, and mixtures thereof.

Potentiators may consist of materials that may intensify, supplement, modify or enhance the taste and/or aroma perception of an original material without introducing a characteristic taste and/or aroma perception of their own. Potentiators designed to intensify, supplement, modify, or enhance the perception of flavor, sweetness, tartness, umami, kokumi, saltiness and combinations thereof may be included.
Examples of suitable potentiators, also known as taste potentiators include, but are not limited to, neohesperidin dihydrochalcone, cholorogenic acid, alapyridaine, cynarin, miraculin, glupyridaine, pyridinium-betain compounds, glutamates, such as monosodium glutamate, and monopotassium glutamate, neotame, thaurmatin, tagatose, trehalose salts, such as sodium chloride, monoammonium glycyrrhizinate, vanilla extract (in ethyl alcohol), sugar acids, potassium chloride, sodium acid sulfate, hydrolysed vegetable proteins, hydrolysed animal proteins, yeast extracts, adenosine monophosphate (AMP), glutathione, nucelotides, such as inosine monophosphate, disodium inosinate, xanthosine monophosphate, gluanylate monophosphate, alapyridaine (N-(1-carboxethyl)-6-(hydroxymethyl)pyridinium-3-ol inner salt, compositions comprising 5'-nucleotides such as those disclosed in US Patent No. 7,968,705 to Noordam et al, sugar beet extract (alcoholic extract), sugarcane leaf essence (alcoholic extract), curculin, strogin, mabinlin, gymnemic acid, hydroxybenoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and T1Rs) and taste potentiator compositions that impart kokumi, as disclosed in U.S, Patent No. 5,679,397 to Kuroda et al, "Kokumi" refers to materials that impart "mouthfulness" and "good body".

Sweetener potentiators which are a type of taste potentiator, enhance the taste of sweeteness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs) and combinations thereof.

Additional example of potentiators for the enhancement of salt taste include acidic peptides, such as those disclosed in U.S. Patent No. 6,974, 597. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casin and milk whey protein, muscle proteins such as meat protein and fish meat protein, egg white protein and collagen), and microbial proteins (e.g., microbial cell protein and polypeptides produced by microorganisms.

The sensation of warming or cooling effects may also be prolonged with the use of a hydrophobic sweetener as described in U.S. Patent No. 7,025,999. For example, such hydrophobic sweeteners include those of the formulae I-XI as set forth below: 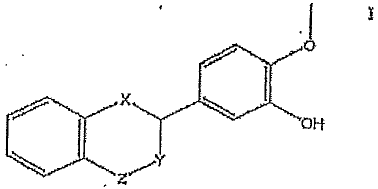
wherein X, Y and Z are selected from the group consist of CH₂, O and S; 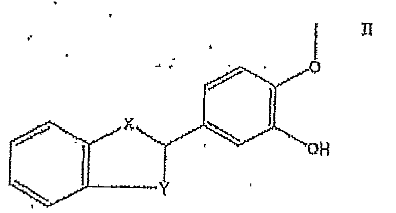
wherein X and Y are selected from the group consisting of S and O; 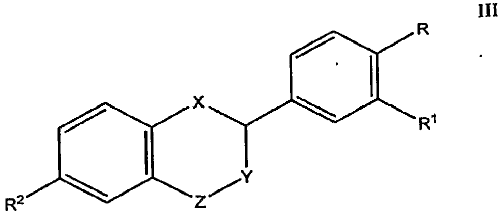
wherein X is S or O; Y is O or CH₂; Z is CH₂, SO₂ or S; R is OCH₃, OH or H; R¹ is SH or OH and R² is H or OH; 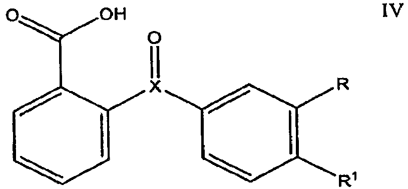
wherein X is C or S; R is OH or H and R¹ is OCH₃ or OH; 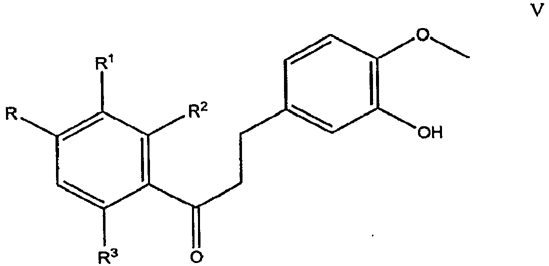
wherein R, R² and R³ are OH or H and R¹ is H or COOH; 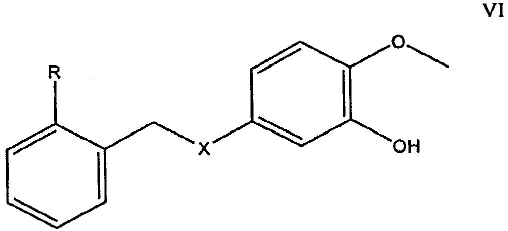
wherein X is O or CH₂ and R is COOH or H; 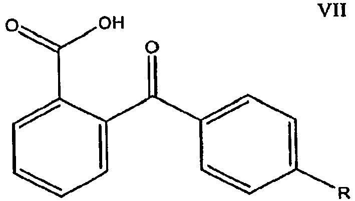
wherein R is CH₃CH₂, OH, N (CH3)₂ or Cl; 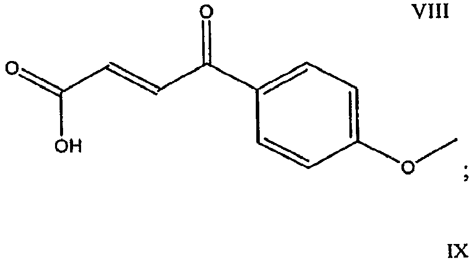 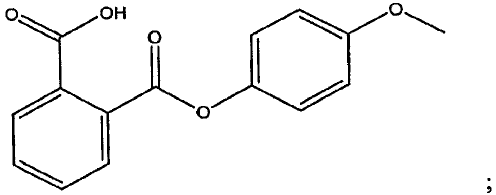 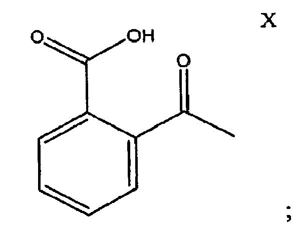
and

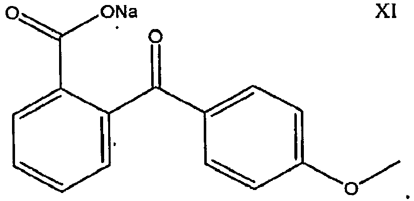

Perillartine may also be added as described in U.S. Patent No. 6,159,509.

Illustrations of the encapsulation of flavors as well as other additional components may be found in the examples provided herein. Typically, encapsulation of a component will result in a change in the release of the predominant amount of the component during consumption of a confectionery or chewing gum composition that includes the encapsulated component (e.g., as part of a delivery system added as a dusting or sanding component to the confectionery or chewing gum composition). The change in release rate may involve a faster or more immediate release while in some embodiments, the change in release rate involves a delayed release. The release profile of the dusting or sanding component (e.g., the flavor, sweetener, etc.) may be managed by managing various characteristics of the dusting or sanding component, delivery system containing the dusting or sanding component, and/or the confectionery or chewing gum composition containing the delivery system and/or how the delivery system is made. For example, characteristics might include one or more of the following: tensile strength of the delivery system, water solubility of the dusting or sanding component, water solubility of the encapsulating material, water solubility of the delivery system, ratio of dusting or sanding component to encapsulating material in the delivery system, average or maximum particle size of dusting or sanding component, average or maximum particle size of ground delivery system, the amount of the dusting or sanding component or the delivery system in the confectionery or chewing gum composition, ratio of different polymers used to encapsulate one or more dusting or sanding component, hydrophobicity of one or more polymers used to encapsulate one or more dusting or sanding component, hydrophobicity of the delivery system, the type or amount of coating on the delivery system, the type or amount of coating on a dusting or sanding component prior to the dusting or sanding component being encapsulated, etc.

### Sensates:

Sensate compounds may include cooling agents, warming agents, tingling agents, effervescent agents, and combinations thereof. A variety of well known cooling agents may be employed. For example, useful cooling agents may include xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides,
substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1- ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl- 5-methyIcyclohexanol (from Hisamitsu Pharmaceuticals, hereinafter "isopregol"); menthone glycerol ketals (FEMA 3807, tradename FRESCOL AT(R) type MGA); 3-1-menthoxypropane- 1 ,2-diol (from Takasago, FEMA 3784); and menthyl lactate; (from Haarman & Reimer, FEMA 3748, tradename FRESCOLAT(R) type ML), WS-30, WS-5, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3- carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents: U.S. 4,230,688; 4,032,661 ; 4,459,425; 4,136,163; 5,266,592; 6,627,233.

Warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. Useful warming compounds may include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethylether, gingerol, shogaol, paradol, zingerone, capasaicin, dihydrocapsaicin, nordihydrocapsaicin, homocapsaicin, homodihydropsaicin, ethanol, isopropyl alcohol, iso-amylalcohol, benzyl alcohol, glycerine, and combinations thereof.

A tingling sensation may be provided. One such tingling sensation is provided by adding jambu oleoresin, or spilanthol to some examples. Alkylamides extracted from materials such as jambu or sanshool may be included. Additionally, a sensation may be created due to effervescence. Such effervescence is created by combining an alkaline material with an acidic material. An alkaline material may include alkali metal carbonates, alkali metal bicarbonates, alkaline earth metal carbonates, alkaline earth methal bicarbonates and mixtures thereof; an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates may be found in U.S. Patent No. 6,780,443.

Sensate components may also be referred to as "trigeminal stimulants" such as those disclosed in U.S. Patent Publication No. 2005/0202118. Trigeminal stimulants are defined as an orally consumed product or agent that stimulates the trigeminal nerve. Examples of cooling agents which are trigeminal stimulants include methol, WS-3, N-subsituted p-menthane carboxamide, acyclic carboxamides including WS-23, WS-5, WS014, methyl succinate, and methone glycerol ketals. Trigeminal stimulants may also include flavours, tingling agents, Jambu extract, vanillyl alkyl ethers, such as vanillyl n-butuyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerine ether, unsaturated amides, and combinations thereof. Other cooling compounds may include derivatives of 2,3-dimenthyl-2- isopropylbutyric acid such as those disclosed in U.S. 7,030,273.

In addition to trigeminal nerve stimulants and cooling compounds, a cooling sensation may be provided by materials exhibiting a negative heat of solution including, but not limited to, dextrose and polyols such as xylitol, erythritol, isomalt, and sorbitol, and combinations thereof.

Sensate components may be used at levels that provide a perceptible sensory experience i.e. at or above their threshold levels. In other embodiments, sensate components are used at levels below their threshold levels such that they do not provide an independent perceptible sensory experience. At subthreshold levels, the sensates may provide an ancillary benefit such as flavor or sweetness enhancement or potentiation.

### Functional Ingredients

Functional ingredients as discussed above and such as, but not limited to, medicaments, nutrients such as vitamins and minerals and the like, nutraceuticals such as phytochemicals and the like, breath freshening agents, oral care agents, probiotic materials, prebiotic materials, taste and/or flavor potentiators, and throat care agents.

### Breath Freshening Ingredients:

Breath fresheners may include essential oils as well as various aldehydes, alcohols, and similar materials. In some embodiments, essential oils may include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. Aldehydes such as cinnamic aldehyde and salicylaldehyde may be used. Additionally, chemicals such as menthol, carvone, iso-garrigol, and anethole may function as breath fresheners. Of these, the most commonly employed are oils of peppermint, spearmint and chlorophyll.

In addition to essential oils and chemicals derived from them, in some embodiments breath fresheners may include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof.

The release profiles of probiotics may be managed for a confectionery or chewing gum including, but not limited to lactic acid producing microorganisms such as *Basillus coagulans, Bacillus subtilis, Bacillus laterosporus*. *Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum*, *Lactobacillus lactis, Pedioccocus acidilacti, Pedioccocus pentosaceus*, *Pedioccocus urinae, Leuconostoc mesenteroides, Bacillus coagulants, Bacillus subtillis, Bacillus laterosporus*, *Bacills laevolacticus, Sporolactobacillus inulinus and mixture thereof.* Breath fresheners are also known by the following trade names Retsyn,™ Acitzol, ™ and Nutrazin. ™ Examples of malodour-controlling compositions are also included in U.S. Patent No. 5,300,305 to Stapler et al, and in U.S. Patent Publication No. 2003/0215417 and US Patent No. 7,347,985.

### Dental Care Ingredients:

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients may include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulphated butyl oleate, sodium oleate, salts of fumaric acide, glycerol, hydroxylated lecithin, sodium lauryl sulfate and chelators such as polyphosphates, which are typically employed as tartar control ingredients. Dental care ingredients may also include tetrasodium pyrophosphate and sodium tri-polyphosphate, sodium bicarbonate, sodium acid pyrophosphate, sodium tripolyphosphate, xylitol, sodium hexametaphosphate.

Peroxides such as carbamide peroxide, calcium peroxide, magnesium peroxide, sodium peroxide, hydrogen peroxide, and peroxydiphosphate may be included. Potassium nitrate and potassium citrate may be included. Other examples may include casein glycomacropeptide, calcium casein peptone-calcium phosphate, casein phosphopeptides, casein phosphopeptide-amorphous calcium phosphate (CPP-ACP), and amorphous calcium phosphate. Still other examples may include papaine, krillase, pepsin, trypsin, lysozyme, dextranase, mutanase, glycoamylase, amylase, glucose oxidase, and combinations thereof.

Further examples may include surfactants such as sodium stearate, sodium ricinoleate, and sodium lauryl sulfate surfactants for use in some embodiments to achieve increased prophylactic action and to render the dental care ingredients more cosmetically acceptable. Surfactants may preferably be detersive materials which impart to the composition detersive and foaming properties. Suitable examples of surfactants are water- soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1 ,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, dental care ingredients may include antibacterial agents such as, but not limited to, triclosan, chlorhexidine, zinc citrate, silver nitrate, copper, limonene, and cetyl pyridinium chloride. Additional anticaries agents may include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride may be included. A fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF2 - KF), sodium hexafluorostannate, stannous chlorofluoride, sodium fluorozirconate, and sodium monofluorophosphate. Urea may be included.

Further examples are included in the following U.S. patents and U.S. published patent application. U.S. Patent Nos. 5,227,154 to Reynolds, 5,378,131 to Greenberg 6,846,500 to Luo et al., 6,733,818 to Lua et al., 6,696,044 to uo et al., 6,685,926 to Holme et al., 6,479,071 to Holme et al., 6,471,945 to Luo et al., 7,445,769 to Holme et al., 7,390,518 to Gebreselassie et al., and US Patent Publication No. 2004/0136928 to Holme et al.

### Active Ingredients:

Actives generally refer to those ingredients that are included in a delivery system and/or confectionery or chewing gum composition for the desired end benefit they provide to the user. Actives may include medicaments, nutrients, nutraceuticals, herbals, nutritional supplements, pharmaceuticals, drugs and the like end combinations thereof.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypersensitive drugs, anti-inflammatory agents, anti-lipid agets, anti-manics, anti-nauseants, anti-stroke agents, anti-thyroid preparations, anti-tumor drugs, anti-viral agents, acne drugs, alkaloids, amino acid preparations, anti tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, antiinflammatory substances, coronary dilators, cerebral dilators, peripheral vasodilators, psychotropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use may include antacids, H2-antagonists, and analgesics. For example, antacid dosages may be prepared using the ingredients calcium carbonate alone or in combination with magnesium hydroxide, and/or aluminum hydroxide. Moreover, antacids may be used in combination with H2-antagonists.

Analgesics include opiates and opiate derivatives, such as Oxycontin(TM), ibuprofen, aspirin, acetaminophen, and combinations thereof that may optionally include caffeine.

Other drug active ingredients for use may include anti-diarrheals such as Immodium^{™} AD, anti-histamines, anti-tussives, decongestants, vitamins, and breath fresheners. Also contemplated for use herein are anxiolytics such as Xanax^{™}; antipsychotics such as Clozaril^{™}, and Haldol^{™}; non-steroidal antiinflammatories (NSAID's) such as ibuprofen, naproxen sodium, Voltaren^{™} and Lodine^{™}, anti-histamines such as Claritin^{™}, Hismanal^{™}, Relafen^{™}, and Tavist^{™}; anti-emetics such as Kytril^{™} and Cesamet^{™}; bronchodilators such as Bentolin^{™}, Proventil^{™}; anti-depressants such as Prozac^{™}, Zoloft^{™}, and Paxil^{™}; anti-migraines such as Imigra^{™}, ACE-inhibitors such as Vasotec^{™}, Capoten^{™} and Zestril^{™}; anti- Alzheimer's agents, such as Nicergoline^{™}; and CaH-antagonists such as Procardia^{™}, Adalat^{™}, and Calan^{™}.

The popular H2-antagonists which are contemplated for use in the present invention include cirnetidine, ranitidine hydrochloride, famotidine, nizatidien, ebrotidine, mifentidine, roxatidine, pisatidine and aceroxatidine.

Active antacid ingredients may include, but are not limited to, the following: aluminium hydroxide, dihydroxyaluminium aminoacetate, aminoacetic acid, aluminium phosphate, dihydroxyaluminium sodium carbonate, bicarbonate, bismuth aluminate, bismuth carbonate, bismuth subcarbonate, bismuth subgallate, bismuth subnitrate, bismuthsubsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminium mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, Vitamin C, vitamin D, vitamin E, vitamin K, vitamin B₆, B₁₂, thiamine, riboflavin, biotin, folic acid, niacin, pantothenic acid, sodium potassium, calcium, magnesium, phosphorus, sulphur, chlorine, iron, copper, iodine, zinc, selenium, manganese, choline, chromium, molybdenum, fluorine, cobalt and combinations thereof, may be used.

Examples of nutritional supplements that may be used as active ingredients are set forth in U.S. Patent Application Publication Nos. 2003/0157213 A1, 2003/0206993 and US Patent No. 6,582,738.

Various herbals may be used as active ingredients such as those with various medicinal or dietary supplement properties. Herbals are generally aromatic plants or plant parts and or extracts thereof that may be used medicinally or for flavoring. Suitable herbals may be used singly or in various mixtures. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Ginko Biloba, St. John's Wort, Evening Primrose Oil, Yohimbe Bark, Green Tea, Ma Huang, Maca, Bilberry, Lutein and combinations thereof.

### Effervescing System Ingredients:

An effervescent system may include one or more edible acids and one or more edible alkaline materials. The edible acid(s) and the edible alkaline material(s) may react together to generate effervescence.

The alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. An effervescing system may include one or more other ingredients such as, for example, carbon dioxide, oral care ingredients, flavorants, etc.

For examples of use of an effervescing system in a chewing confectionery, refer to U.S. Patent Publication No. 2006/078509 filed October 13, 2004 and entitled "Effervescent Pressed Confectionery Tablet Compositions". Other examples may be found in U.S. Patent No. 6,235,318.

### Appetite Suppressor Ingredients:

Appetite suppressors may be ingredients such as fiber and protein that function to depress the desire to consume food. Appetite suppressors may also include benzphetamine, diethylpropion, mazindol, phendimetrazine, phentermine, hoodia (P57), Olibra,™ ephedra, caffeine and combinations thereof. Appetite suppressors are also known by the following trade names: Adipex,™, Adipost,™ Bontril™ PDM, Bontril™ Slow Release, Didrex,™ Fastin,™ Ionamin,™ Mazanor,™ Melfiat,™ Obenix,™ Phendiet,™ Phendiet-105,™ Phentercot,™ Phentride,™ Plegine,™ Prelu-2,™ Pro-Fast, ^{™} PT 105,™ Sanorex,™ Tenuate,™ Sanorex,™ Tenuate,™ Tenuate Dospan,™ Tepanil Ten-Tab,™ Teramine,™ and Zantryl.™ These and other suitable appetite supressors are further described in the following U.S. patents: U.S. 6,838,431 to Portman, U.S. 6,716,815 to Portman U.S. 6,558,890 to Portman U.S. 6,468,962 to Portman, U.S. 6,436,899 to Portman.

### Micronutrient Ingredients:

Micronutrients may include materials that have an impact on the nutritional well being of an organism even though the quantity required by the organism to have the desired effect is small relative to macronutrients such as protein, carbohydrate, and fat. Micronutrients may include, but are not limited to vitamins, minerals, enzymes, phytochemicals, antioxidants, and combinations thereof.

Vitamins may include fat soluble vitamins such as vitamin A, vitamin D, vitamin E, and vitamin K and combinations thereof. Vitamins may include water soluble vitamins such as vitamin C (ascorbic acid), the B vitamins (thiamine or Bi, riboflavoin or B2, niacin or B3, pyridoxine or B6, folic acid or B9, cyanocobalimin or B 12, pantothenic acid, biotin), and combinations thereof.

Minerals may include, but are not limited to, sodium, magnesium, chromium, iodine, iron, manganese, calcium, copper, fluoride, potassium, phosphorous, molybdenum, selenium, zinc, and combinations thereof.

Micronutrients may include, but are not limited to, L- carnitine, choline, coenzyme Q10, alpha-lipoic acid, omega-3-fatty acids, omega-6-fatty acids, pepsin, phytase, trypsin, lipases, proteases, cellulases, and combinations thereof.

Antioxidants may include materials that scavenge free radicals. Antioxidants may include, but are not limited to, ascorbic acid, citric acid, rosemary oil, vitamin A, vitamin E, vitamin E phosphate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

Phytochemicals may include, but are not limited to, cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate (EGCG), theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof.

### Mouth Moistening Ingredients:

Mouth moisteners may include, but are not limited to, saliva stimulators such as acids and salts and combinations thereof. In some embodiments, acids may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Mouth moisteners may also include hydrocolloid materials that hydrate and may adhere to oral surface to provide a sensation of mouth moistening. Hydrocolloid materials may include naturally occurring materials such as plant exudates, seed gums, and seaweed extracts or they may be chemically modified materials such as cellulose, starch, or natural gum derivatives. Hydrocolloid materials may include pectin, gum arabic, acacia gum, alginates, agar, carageenans, guar gum, xanthan gum, locust bean gum, gelatin, gellan gum, galactomannans, tragacanth gum, karaya gum, curdlan, lconjac, chitosan, xyloglucan, beta glucan, furcellaran, gum ghatti, tamarin, bacterial gums, and combinations thereof. Additionally, modified natural gums such as propylene glycol alginate, carboxymethyl locust bean gum, low methoxyl pectin, and their combinations can be included. Modified celluloses can be included such as microcrystalline cellulose, carboxymethylcellulose (CMC), methylcellulose (MC), hydroxypropylmethylcellulose (HPCM), and hydroxypropylcellulose (MPC), and combinations thereof.

Similarly, humectants which may provide a perception of mouth hydration may be included. Such humectants may include, but are not limited to glycerol, galactose, sorbitol, polyethylene glycol, erythritol, and xylitol. Additionally, in some embodiments, fats may provide a perception of mouth moistening. Such fats may include medium chain triglycerides, vegetable oils, fish oils, mineral oils, and combinations thereof.

### Throat Care Ingredients:

Throat soothing ingredients may include analgesics, anesthetics, demulcents, antiseptic, and combinations thereof. In some embodiments, analgesics/anesthetics may include menthol, phenol, hexylresorcinol, benzocaine, dyclonine hydrochloride, benzyl alcohol, salicyl alcohol, and combinations thereof. Demulcents may include, but are not limited to, slippery elm bark, pectin, gelatin, and combinations thereof. Antiseptic ingredients may include cetylpyridinium chloride, domiphen bromide, dequalinium chloride, and combinations thereof.

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof may be included.

In some embodiments, throat soothing agents such as honey, propolis, aloe vera, glycerine, menthol and combinations thereof may be included. Cough suppressants may be included. Such cough suppressants may fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). Ingredients from either or both groups may be included.

Antitussives may include, but are not limited to, the group consisting of codeine, dextromethorphan, dextrorphan, diphenhydramine, hydrocodone, noscapine, oxycodone, pentoxyverine and combinations thereof. In some embodiments, antihistamines may include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines may include, but are not limited to, astemizole, cetirizine, ebastine, fexofenadine, loratidine, terfenadine, and combinations thereof.

Expectorants may include, but are not limited to, ammonium chloride, guaifenesin, ipecac fluid extract, potassium iodide and combinations thereof. Mucolytics may include, but are not limited to, acetylcysteine, ambroxol, bromhexine and combinations thereof. In some embodiments, analgesic, antipyretic and anti-inflammatory agents may include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. Local anesthetics may include, but are not limited to, lidocaine, benzocaine, phenol, dyclonine, benzonotate and mixtures thereof.

Nasal decongestants and ingredients that provide the perception of nasal clearing may be included. Nasal decongestants may include, but are not limited to, phenylpropanolamine, pseudoephedrine, ephedrine, phenylephrine, oxymetazoline, and combinations thereof. Ingredients that provide a perception of nasal clearing may include but are not limited to menthol, camphor, borneol, ephedrine, eucalyptus oil, peppermint oil, methyl salicylate, bornyl acetate, lavender oil, wasabi extracts, horseradish extracts, and combinations thereof. A perception of nasal clearing may be provided by odoriferous essential oils, extracts from woods, confectioneries, flowers and other botanicals, resins, animal secretions, and synthetic aromatic materials.

### Acids

The food acid materials may be selected such that they provide a sour taste intensity of at least 4 on a scale from 0 to 10. Scales that may be used to measure sour taste have been developed by several sensory researchers. One example of a scale has been developed by Dr. Howard Moskowitz and is discussed in the journal article entitled Sourness of Acid Mixtures as published in The Journal of Experimental Psychology, April 1974; 102(4); 640-7 and in the journal article entitled Ration Scales of Acid Sourness as published in Perception and Psychophysics; 9:371-374, 1971.

Where a coating with a sour taste perception is desired, the coating composition may include food acids. It has been found that including food acids with hygroscopicities lower than citric acid in the coating will reduce the amount of water being pulled from the gummy candy and thus improve the keeping quality of the confection. Food acids with hygroscopicities lower than citric acid may include malic acid and lactic acid. Also, food acids with hygroscopicities lower than the hygroscopicity of the gummy candy shell may reduce moisture migration.

A coating with a sour taste perception similar to the sour taste perception provided by citric acid is desired. The sour taste perception of an aqueous solution of 0.2 % w/w of citric acid has been characterized as providing clean and refreshing tartness. A coating with a sour taste perception similar to the sour taste perception of a 0.2 % w/w solution of citric acid is created by using acids other than citric acid. A coating with a sour taste perception similar to the sour taste perception of a 0.2 % w/w solution of citric acid is created with one or more food acids with hygroscopicities lower than citric acid.

A coating with a sour taste intensity of at least 4 on a scale of 0 to 10 is desired. A coating with a sour taste intensity of at least 4 on a scale of 0 to 10 is created using one or more food acids with hygroscopicities less than citric acid.

The encapsulated ingredient may include a food acid such as acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and combinations thereof. The food acids may include lactic acid, tartaric acid, fumaric acid, malic acid, and combinations thereof. The food acid materials are selected such that they provide a sour taste intensity equivalent to a 0.2 % w/w solution of citric acid.

The amount of acid used may be determined by calculating the number of hydrogen ions released by a given acid or acid blend relative to the number of hydrogen ions released by a particular amount of citric acid. Adjustments may then be made in the amount of the acid(s) to provide the same number of released hydrogen ions that would be released by that particular amount of citric acid.

### Confectionery Compositions

The confectionery compositions may include a confectionery base, an intrinsic moisture resistant barrier layer, and a coating. The confectionery base may include chewable gummy candy or "gummi" confections. Also included in those chewable forms are soft candies such as, but not limited to, gum drops, licorice, fruit snacks, starch based jellies, gelatin based jellies, pectin based jellies, carageenan based jellies, agar based jellies, lconjac based jellies, chewy candy, starch candy, nougat, toffee, taffy, marshmallow, fondant, fudge, chocolate, compound coating, carob coating, caramel, compressed tablets, candy floss (also known as cotton candy), marzipan, hard boiled candy, nut brittles, pastilles, pralines, nonpareils, dragees, lozenges, sugared nuts, comfits, aniseed balls, nougatine, and jelly beans. The base of the confectionery may be a sugar/glucose syrup combination or a polyol/polyol syrup combination and a gelatinizing agent, the latter of which may be gelatin, agar, gum arabic, maltodextrin, pectin, modified starches or combinations thereof. Various other gums (also referred to as hydrocolloids) may also be used. The gelatinizing material may be desirably dissolved in water or otherwise hydrated prior to mixing with the sugar/glucose syrup combination. If a hydrocolloid such as pectin is used as the gelatinizing agent, then the pectin is desirably dry mixed with a portion of the sugar or bulk sweetener prior to addition of the dry mixture to water.

### Chewing Gum Compositions

Chewing gum compositions may be provided in a variety of different forms, such as, for example, slab, pellet, sticks, balls, cubes, center-fill gums, candy gum, multi- region gum, multi-layer gum, bubble gum, deposited gums and compressed gums. The chewing gum compositions also may include at least one flavor and a variety of optional additives.

The chewing gum composition also may include a gum base. The gum base may include any component known in the chewing gum art. Such components may be water soluble, water-insoluble or a combination thereof. For example, the gum base may include elastomers, bulking agents, waxes, elastomer solvents, emulsifiers, plasticizers, fillers and mixtures thereof.

### Intrinsic Moisture Barrier Layer

An intrinsic moisture resistant barrier layer may be provided which may prevent moisture migration between the confectionery or chewing gum base and the coating. The intrinsic moisture resistant barrier layer may include a crystalline form of a saccharide or polyol. The intrinsic moisture resistant barrier layer may be formed when saccharides or polyols in the confectionery base crystallize at the surface of the confectionery or chewing gum base.

To aid the process of crystallization, the amount of crystallizing saccharide or polyol in the confectionery base may be increased as compared to confectionery or chewing gum base compositions without intrinsic moisture resistant barrier layers.

For example, the amount of sucrose in a confectionery or chewing gum base may be increased from 70% glucose to 30% sucrose to 50% glucose to 50% sucrose. This increase in the relative amount of sucrose may aid in the formation of a crystalline sucrose intrinsic moisture resistant barrier layer.

The process of crystallization may be aided by the application of seed crystals to the surface of the confectionery or chewing gum base by nucleating the saccharide or polyol contained in the confectionery or chewing gum base.

Seed crystals may be included in a molding composition that comes in contact with the confectionery base. Molding composition may include starch. The process of molding may include drying the starch containing molding composition to a desired moisture level and placing it in trays. Impressions may then be created in the starch trays after which the confectionery or chewing gum base may be Filled into the impressions. After allowing the confectionery or chewing gum base to reach a desired firmness, the confectionery or chewing gum base is separated from the molding composition and further processed, packaged, etc.

In another example, seed crystals of erythritol may be included in the starch used for starch molding an erythritol-containing confectionery or chewing gum base. These seed crystals may aid in the formation of a crystalline erythritol intrinsic moisture resistant barrier layer.

### Center-fill Composition

There may be provided a center-fill composition which is included in a center-fill chewing gum or confectionery composition. The center-fill chewing gum composition may include a center-fill composition and a chewing gum region. The center-fill confectionery composition may include a center-fill composition and a confectionery region. The center-fill composition may include any conventional filling or combination of filling materials. The center-fill may be sugar or sugar-free and it may contain fat or be fat-free. Additionally, the center-fill may contain vegetable-based, dairy-based or fruit-based materials such as, but not limited to, fruit juices, fruit concentrates, fruit purees, dried fruit materials, and the like. Further, the center-fill component may include one or more sweeteners such as those discussed above. The center- fill may also include one or more hydrocolloid materials.

Hydrocolloid materials may include naturally occurring materials such as plant exudates, seed gums, and seaweed extracts or they may be chemically modified materials such as cellulose, starch, or natural gum derivatives. Hydrocolloid materials may include starches, flour, pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, modified natural gums such as propylene glycol alginate, carboxymethyl locust bean gum, low methoxyl pectin, and their combinations may be included. In some embodiments, modified celluloses may be included such as microcrystalline cellulose, carboxymethylcellulose (CMC), methylcellulose (MC), hydroxypropylmethylcellulose (HPCM), and hydroxypropylcellulose (MPC), and combinations thereof. It may be desirable to include hydrocolloid materials that increase the viscosity of the center-fill composition.

The texture of the center-fill may be the same as the texture of the chewing gum or confectionery composition. In other embodiments, the texture of the center-fill is different than the texture of the chewing gum or confectionery composition.

The appearance of the center-fill may be the same as the appearance of the chewing gum or confectionery composition. The appearance of the center-fill may be different than the appearance of the chewing gum or confectionery composition.

The center-fill chewing gum or confectionery composition may also include one or more food acids as discussed above and such as acetic acid, adipic acid, ascorbic acid, butyric acid, citric acid, formic acid, fumaric acid, glyconic acid, lactic acid, phosphoric acid,
malic acid, oxalic acid, succinic acid, tartaric acid, citrates, and combinations thereof. These food acids or blends thereof may be included in amounts from about 0.5% w/w to about 5,0% w/w of the center-fill composition. Buffering agents such as citrates may be included.

The center-fill chewing gum or confectionery composition may include buffering agents, coloring, flavoring, and preservatives.

Further, the center-fill composition may include functional ingredients as discussed above and such as, but not limited to, medicaments, nutrients such as vitamins and minerals and the like, nutraceuticals such as phytochemicals and the like, breath freshening agents, oral care agents, probiotic materials, prebiotic materials, taste and/or flavor potentiators, and throat care agents.

The center-fill composition may include flavors and/or sensates as discussed above.

The center-fill composition may be included in the coated center-filled chewing gum or confectionery composition in amounts from about 1 percent by weight of the total composition to about 25 percent by weight of the total composition.

### Gummy Candy Shell Composition

The gummy candy shell composition may include any conventional gummy candy materials such as, but not limited to, sweeteners, hydrocolloids and food acids. Suitable examples of these materials are described above and may be used with equal applicability here. For the hydrocolloid materials, a desired texture is created by using hydrocolloids that form chewable gels when combined with the other ingredients in the gummy candy shell composition.

Pectin and gelatin may be used together in a gummy candy shell composition as described in U.S. Patent Publication. No. 2005/260329, filed October 28, 2004. This combination of hydrocolloids may create a gummy candy shell that sets up quickly and provides adequate shell strength and desirable texture.

The gummy candy shell composition may contain sweeteners in amounts from about 35% w/w to about 75 % w/w of the gummy candy shell composition. The gummy candy shell composition may contain from about 0.01 % w/w to about 15 w/w, and preferably from about 1% to about 8% w/w of hydrocolloids. The gummy candy shell composition may contain from about 0.3% to about 3%, and preferably from about 0.5 % w/w/ and about 2.0% w/w food acids.

As with the center-fill composition, the gummy candy shell composition can also include buffering agents, coloring, flavoring, and preservatives.

Further, the gummy candy shell composition can include functional ingredients such as, but not limited to, medicaments, nutrients such as vitamins and minerals and the like, nutraceuticals such as phytochemicals and the like, breath freshening agents, oral care agents, probiotic materials, prebiotic materials, taste and/or flavor potentiators, and throat care agents.

The gummy candy shell composition can include flavors and/or sensates as discussed above.

The gummy candy shell composition can be included in the coated center-filled gummy candy composition in amounts from about 70 percent by weight of the total composition to about 95 percent by weight of the total composition.

### Coated Center-fill Gummy Candy Composition

In multiple component confectionery compositions, there is a natural tendency for moisture to migrate from areas of higher concentration to areas of lower concentration. This can result in multiple component confectionery compositions that lack desired textures as the textures can lose their differentiation as the moisture equilibrates. For example, if the gummy candy shell composition has less moisture than the center-fill composition, the moisture will migrate out of the center-fill causing the center-fill to become firmer resulting in a center-fill texture that is similar to the gummy candy shell texture. Similarly, if the coating composition is more hygroscopic than the gummy candy shell composition, the coating will pull moisture out of the shell resulting in a less crispy or friable coating or a coating that appears and feels "wet" i.e. not dry. In some embodiments, hygroscopic ingredients can be encapsulated to reduce their moisture pick up.

The solids content of the center-fill composition and the gummy candy shell composition may be similar and may be from about 10% w/w to about 85% w/w of the individual composition. The solids content of the center-fill composition may be equal to the solids content of the gummy candy shell composition. The solids content of the center-fill composition may be less than or equal to the solids content of the gummy candy shell composition. Solids content may be measured by any conventional means including methods that provide a Brix value such as by using a refractometer.

In addition to manipulation of the solids content of the center-fill composition and the gummy candy shell composition, moisture migration can be managed by controlling the amount of bound water in the compositions.

The amount of bound water in a food product can be expressed as the water activity (aw). Water activity can be measured by any conventional means known to those of skill in the art and is expressed in amounts ranging from 0.00 to 1.00. In some embodiments, the water activity of the center-fill composition is substantially similar to the water activity of the gummy candy shell composition and can be in the range from about 0.5 to about 0.8. The water activity of the center-fill composition may be equal to the water activity of the gummy candy shell composition. The water activity of the center-fill composition may be less than the water activity of the gummy candy shell composition.

The water activity may be manipulated by varying the solids contents of the center-fill and gummy candy shell compositions. The water activity may be manipulated by selecting the materials used in the compositions based on their water binding capacities and using those materials in concentrations that alter the water activity of the compositions.

In addition to manipulation of the solids contents and water activities of the center-fill composition and the gummy candy shell composition; moisture migration can be managed by an intrinsic moisture resistant barrier layer. The intrinsic moisture resistant barrier layer can include a crystalline form of a saccharide or polyol. The moisture resistant intrinsic moisture resistant barrier layer may be formed when saccharides or polyols in the confectionery base crystallize at the surface of the confectionery base.

To aid the process of crystallization, the amount of crystallizing saccharide or polyol in the confectionery base can be increased as compared to confectionery base compositions without intrinsic moisture resistant barrier layers.

For example, the amount of sucrose in a confectionery base can be increased from 60% glucose to 40% sucrose to 50% glucose to 50% sucrose. This increase in the relative amount of sucrose can aid in the formation of a crystalline sucrose intrinsic moisture resistant barrier layer.

The process of crystallization can be aided by the application of seed crystals to the surface of the confectionery base by nucleating the saccharide or polyol contained in the confectionery base.

Seed crystals can be included in a molding composition that comes in contact with the confectionery base. The molding composition can include starch. The process of molding can include drying the starch-containing molding composition to a desired moisture level and placing it in trays. Impressions can then be created in the starch trays after which the confectionery base can be filled into the impressions. After allowing the confectionery base to reach a desired firmness, the confectionery base is separated from the molding composition and further processed, packaged, etc.

In another example, seed crystals of erythritol can be included in the starch used for starch molding an erythritol-containing confectionery base. These seed crystals can aid in the formation of a crystalline erythritol intrinsic moisture resistant barrier layer.

Migration of moisture to and from the coating composition and the gummy candy shell composition can be controlled by manipulating the hygroscopicities of the compositions. The hygroscopicity of the coating composition may be controlled by selecting materials that provide a desired hygroscopicity. The hygroscopicity of the coating composition may be less than the hygroscopicity of the gummy candy shell composition. The hygroscopicity of the coating composition can be controlled by encapsulating ingredients with undesirable hygroscopicity.

In addition to managing moisture migration in center-filled compositions, managing the placement or centering of the center-fill may be an important aspect of center filled gummy candies. Placement of the center-fill composition may be controlled by manipulating the specific gravity of the gummy shell and center-fill compositions. The specific gravity of the gummy shell composition may be about the same as the specific gravity of the center-fill composition. Placement of the center-fill composition may also be controlled by manipulating the deposition temperatures of the gummy shell composition and center-fill compositions. The deposition temperature of the gummy shell composition may be higher than the deposition temperature of the center fill composition. When the lower temperature center-fill comes into contact with the gummy shell composition during deposition, the gummy shell composition will cool and the center- fill composition will remain centered.

Due to the multiple regions included in the coated center-filled gummy candy, it is possible to modify the composition of the individual regions to achieve a desired effect. For example, the coating may be formulated to provide a sour taste perception while the gummy shell and center-fill may be formulated to provide a sweet taste perception. Upon consumption, a sour taste followed by a sweet taste may be perceived. Different flavors may be included in the different regions to provide a contrasting flavor perception or a blended flavor perception. Ingredients that are not compatible with each other may be placed in different regions to avoid undesirable interactions.

The coated center-filled gummy candy may be formed into a shape that communicates the nature of the taste and/or flavor of the candy. For example, a coated center-filled gummy candy with a strawberry flavor may be formed by molding into the shape of a strawberry. The candy may be formed into a shape that does not communicate the taste and/or, flavor of the candy. For example, a strawberry flavored coated center-filled gummy candy may be formed by molding into the shape of a pineapple. Such contrasting taste and visual cues may increase the play value of the candy.

Similarly, the multiple regions of the coated center-filled gummy candy can be modified to achieve desired visual effects. For example, one color may be included in the coating composition while different colors are included in the gummy shell and center-fill compositions. The opacity of the regions may differ to provide other visual effects. For example, the center-fill may be opaque while the gummy shell and transparent and the coating is translucent. Different opacities may be combined with the same or different colors for still more visual effects.

### Processing

Center-fill chewing gums may include a center-fill region, which may be a liquid or powder or other solid, or gas, and a gum region. Some center-fill chewing gums also may include an outer gum coating or shell, which typically provides a crunchiness or texture difference as compared to un-coated gum to the piece when initially chewed. The outer coating or shell may at least partially surround the gum region. Center- fill chewing gums and methods of preparing same are more fully described in assignee's co- pending U.S. Patent Application No. 10/925,822, filed on August 24.

The center-fill gum composition and other compositions described herein may be formed by any technique known in the art which includes the method described by U.S. Patent No. 6,280,780 to Degady et al. ("Degady") describes an apparatus and method for forming center-filled gum pellets. The method includes first extruding a liquid-filled rope of a chewing gum layer and passing the rope through a sizing mechanism including a series of pairs of pulley-shaped roller members. The roller members "size" the rope or strand of gum material such that it leaves the series of rollers with the desired size and shape for entering a tablet-forming mechanism.

The rope is then led into a tablet-forming mechanism including a pair of rotating chain die members which are endless chain mechanisms and both rotate at the same speed by a motor and gear mechanism. Each of the chain mechanisms include a plurality of open curved die groove members which mate and form die cavities in which the pieces of gum material (pellets or tablets) are formed. While Degady is limited to the formation of pellet or tablet shaped pieces, the gum pieces may be of other shapes as described above. The shape of the die groove members may be altered to provide any desired shape.

The gum may optionally be passed through a cooling tunnel either before entering the tablet-forming mechanism, after exiting the tablet-forming mechanism or both. Cooling of the rope prior to entering the tablet-forming mechanism may be beneficial to prevent rebound of the individual pieces and thus may provide an increase in productivity.

The cooled pieces of gum material are then fed into a storage container for conditioning and further processing. At this point, the cooled pieces of gum material could also be fed directly into a coating tunnel mechanism, such as a rotating tunnel mechanism.

Whether the pieces of formed gum material are first stored, transported in a storage container, or fed directly into a coating tunnel or mechanism, the individual pieces of gum material may subsequently be subjected to a conventional sugar or sugarless coating process in order to form a hard exterior shell on the liquid-filled gum material. A variety of coating processes or mechanisms of this type are known. In some embodiments, the coating is applied in numerous thin layers of material in order to form an appropriate uniform coated and finished quality surface on the gum products, The hard coating material, which may include sugar, maltitol, sorbitol or any other polyol, including those described herein, and optionally flavoring, is sprayed onto the pellets of gum material as they pass through a coating mechanism or a coating tunnel and are tumbled and rotated therein. In addition, conditioned air is circulated or forced into the coating tunnel or mechanism in order to dry each of the successive coating layers on the formed products. The coating, or outermost region, can be formed by lamination, dual or multiple extrusion, or any other process that creates an outermost region.

The coating composition may range from 2% to 80%, more specifically, 20% to 40% by weight of an individual gum or confectionery piece which includes a center-fill, a gum or confectionery region and a coating; even more specifically, from 25% to 35% and still more specifically 30%. The coating may include sugar or polyol such as maltitol as the primary component, but may also include flavors, colors, etc. as described below in the discussion of the gum region. The coating or outermost region may be crystalline or amorphous.

Chewing gum embodiments may include an outer gum coating or shell, which typically provides a crunchiness or texture difference as compared to un-coated gum to the piece when initially chewed. The outer coating or shell may at least partially surround the gum region.

Chewing gum can be created using any conventional method known to those of ordinary skill in the art. Gum base may be warmed or melted in a gum mixer to which bulk sweeteners and sweetener or polyol syrups are added and mixed until homogeneous. Flavors (which can include sensates dissolved or suspended therein), food acids, and any other ingredients are then added with mixing. Once the gum is mixed as desired, the gum mass is further processed into individual pieces. A rope of chewing gum may be extruded or formed and is then led into a tablet-forming mechanism including a pair of rotating chain die members which are endless chain mechanisms and both rotate at the same speed by a motor and gear mechanism. Each of the chain mechanisms include a plurality of open curved die groove members which mate and form die cavities in which the pieces of gum material (pellets or tablets) are formed. The gum pieces may be of other shapes as described above. The shape of the die groove members may be altered to provide any desired shape.

The gum may optionally be passed through a cooling tunnel either before entering the tablet-forming mechanism, after exiting the tablet-forming mechanism or both. Cooling of the rope prior to entering the tablet-forming mechanism may be beneficial to prevent rebound of the individual pieces and thus may provide an increase in productivity.

The cooled pieces of gum material are then fed into a storage container for conditioning and further processing. At this point, the cooled pieces of gum material could also be fed directly into a coating tunnel mechanism, such as a rotating tunnel mechanism.

The chewing gum pieces may be formed by rolling the chewing gum into sheets and cutting the pieces into various shapes such as cubes, rectangles, slabs, sticks, etc.

Whether the pieces of formed gum material are first stored, transported in a storage container, or fed directly into a coating tunnel or mechanism, the individual pieces of gum material may subsequently be subjected to a conventional sugar or sugarless coating process in order to form a hard exterior shell on the liquid-filled gum material. A variety of coating processes or mechanisms of this type are known. The coating may be applied in numerous thin layers of material in order to form an appropriate uniform coated and finished quality surface on the gum products. The hard coating material, which may include sugar, maltitol, sorbitol or any other polyol, including those described herein, and optionally flavoring, is sprayed onto the pellets of gum material as they pass through a coating mechanism or a coating tunnel and are tumbled and rotated therein. In addition, conditioned air is circulated or forced into the coating tunnel or mechanism in order to dry each of.the successive coating layers on the formed products. The coating, or outermost region, can be formed by lamination, dual or multiple extrusion, or any other process that creates an outermost region.

The coating composition may range from 2% to 80%, more specifically, 5% to 15% by weight of an individual gum piece. The coating may include sugar or polyol such as maltitol as the primary component, but may also include flavors, colors, etc. as described below in the discussion of the gum region. The coating or outermost region may be crystalline or amorphous.

Coated center-filled gummy candy compositions can be created using any conventional method known to those of ordinary skill in the art. The center-fill composition can be prepared by mixing the individual ingredients together with conventional mixing equipment such as batch cookers, scraped surface mixers, and the like. Hydrocolloid materials may be hydrated prior to addition to the center-fill composition. The mixed center-fill composition may be heat treated to adjust the solids content to a desired level. The mixture may be heated to a final temperature of 215°F to 235°F.

The gummy candy shell composition can be prepared by hydrating the hydrocolloids prior to addition to the sweetener(s). The hydrocolloids can be dry blended with other solids to facilitate hydration. Once the hydrocolloid material is mixed into the sweetener(s), the mixture is heat treated to adjust the solids content to a desired level. The mixture may be heated to a cook temperature from about 200°F to about 300°F, preferably from about 250°F to about 275°F. Vacuum cooking may be used.

The center-filled gummy candy may be created by co-depositing using a depositing nozzle with concentric design elements that allow the gummy candy shell to be deposited into a mold prior to depositing of the center- fill. This concentric design can create a piece that includes a center-fill inside a gummy candy shell. The temperature of the center-fill mixture being fed into the co-depositor and the temperature of the gummy candy shell mixture being fed into the co-depositor may not be the same. The temperature of the center-fill may be less than the temperature of the gummy candy shell mixture. The temperature of the center-fill mixture may be from about 70°F to about 90°F and the temperature of the gummy candy shell mixture is from about 180°F to about 210°F.

The co-depositor may feed the center-fill mixture and the gummy candy shell mixture into starch molds. Examples of processing equipment that can perform these operations are available from manufacturers such as NID and Mogul.

The coating composition can be applied to the center-filled gummy candy by any conventional means known to those of ordinary skill in the art. The coating composition including free and/or encapsulated ingredients may be in particulate form and the center-filled gummy candy may be subjected to a brief steam treatment prior to applying the coating. The wetted surface of the steam treated center-filled gummy candy can cause the particulate coating composition including free and/or encapsulated ingredients to adhere to the surface. Alternatively, a wetting syrup including carbohydrates such as sweeteners and/or hydrocolloids can be applied to the surface of the center-filled gummy candy to cause the particulate coating including free and/or encapsulated ingredients to adhere to the surface.

As mentioned above, a wetting syrup may also be applied to the surface of the product. The wetting syrup may be aqueous or non-aqueous. An aqueous wetting syrup may be used with any of the confectionery compositions and particulate coatings described in detail above which are moisture tolerant. For instance, aqueous wetting syrups may include dextrin, saccharides and water. Other alternatives may include water-based shellacs, saccharides, hydrocolloids and water. A non-aqueous wetting syrup may be used with any of the confectionery compositions and particulate coatings described in detail above which are not moisture tolerant. For instance, non-aqueous wetting syrups may include 0-25% water, resins, fats, waxes, liquid oils and combinations thereof. In addition, the non-aqueous wetting syrup may include a solvent based shellac.

The tackiness of a confectionery surface to which an aqueous wetting syrup has been applied may be manipulated by varying the drying conditions. Manipulating the tackiness of a confectionery surface affects the adherence of various particle size distributions of the particulate coating being adhered to the surface of the confectionery composition. Longer drying times increase the tackiness of the confectionery surface. When the confectionery surface is tackier, larger particles will adhere. A drying time of 30 to 60 seconds may result in adherence of particles with particles sizes of greater than 100 microns.

Shorter drying times may increase the wetness of the confectionery surface. When the confectionery surface is wetter, smaller particles will adhere. A drying time of 0-30 seconds may result in adherence of particles with particle sizes of 5-100 microns.

A particulate coating composition may include a range of particle sizes. For example, a particulate coating composition including 33% of particles from 10-60 microns plus 33% of particles from 60-110 microns plus 33% of particles from 110 microns and above could be adhered to a confectionery surface by drying for 45-60 seconds following application of an aqueous wetting syrup.

The tackiness of a confectionery surface to which a non-aqueous wetting syrup has been applied may be manipulated by varying the concentration of the non-aqueous components in the wetting syrup. A more concentrated wetting syrup may be used to adhere larger particle sized particles. A more dilute wetting syrup may be used to adhere smaller particle sized particles.

Moisture sensitive ingredients such as carbonated or gasified candy can be included in the particulate coating composition.

The coating may be applied using conventional soft or hard panning processes. These processes can include the sequential application of multiple layers of wet and dry materials that build up to form the coating. Encapsulated ingredients can be added in either the wet or dry materials or both.

### Examples

The confectionery composition is prepared by combining the components as set forth in Examples A-O in Tables 1-3.

### Example 1: Center-fill Confectionery Composition

The center-fill composition is prepared by combining the components as set forth in Examples A-D in Table 1. The amounts included are based on the weight percent of the total center-fill composition.

**TABLE 1- Center-fill Composition**

| **Components** | **% by weight** | | | |
|---|---|---|---|---|
| | A | B | C | D |
| Sugar | 42 - 48 | 42 - 48 | | |
| Corn Syrup | 42 - 48 | 42 - 48 | | |
| Polyol (syrup or slurry) | | | 84 - 96 | 84 - 96 |
| Guar Gum | 0.1 - 0.7 | | 0.1 - 0.7 | |
| Citric Acid | 0.7 - 4.5 | 0.7 - 4.5 | 0.7 - 4.5 | 0.7 - 4.5 |
| Flavor | 0.05 - .30 | 0.05 - .30 | 0.05 - .30 | 0.05 - .30 |
| Color | 0.1 - 0.7 | 0.1 - 0.7 | 0.1 - 0.7 | 0.1 - 0.7 |

The gummy candy shell composition is prepared by combining the components as set forth in Examples E-J in Table 2. The amounts included are based on the weight percent of the total gummy candy shell composition.

**TABLE 2 - Gummy Candy Shell Composition**

| **Components** | **% by weight** | | | | | |
|---|---|---|---|---|---|---|
| | E | F | G | H | I | J |
| Sugar | 15 - 25 | 15 - 25 | | | 20 - 35 | |
| Corn Syrup | 30 - 45 | 30 - 45 | | | 20 - 35 | |
| Xylitol | | | 45 - 70 | | | |
| Erythritol | | | | 45 - 70 | | 20 - 35 |
| HSH | | | | | | 20 - 35 |
| Citric Acid | 0.5 - 1.5 | 0.5 - 1.5 | 0.5 - 1.5 | 0.5 - 1.5 | 0.5 - 1.5 | 0.5 - 1.5 |
| Gelatin | 7 - 12 | | 7 - 12 | | | 7 - 12 |
| Pectin | 0.8 - 1.5 | | 0.8 - 1.5 | | | 0.8 - 1.5 |
| Carrageenan | | 1.5 - 3.0 | | 1.5 - 3.0 | 1.5 - 3.0 | |
| Color | 0.1 - 0.7 | 0.1 - 0.7 | 0.1 - 0.7 | 0.1 - 0.7 | 0.1 - 0.7 | 0.1 - 4.7 |
| Flavor | 0.05 - 0.30 | 0.05 - 0.30 | 0.05 - 0.30 | 0.05 - 0.30 | 0.05 - 0.30 | 0.05 - 0.30 |

The coating composition in particulate form is prepared by combining the components as set forth in Examples K-O in Table 3. The amounts included are based on the weight percent of the total coating composition.

**TABLE 3 - Coating Composition**

| **Components** | **% by weight** | | | | |
|---|---|---|---|---|---|
| | K | L | M | N | O |
| Sugar | 75-85 | 75-85 | | | 75-85 |
| Polyol | | | 75-85 | 75-85 | |
| Free Lactic Acid | 5 - 15 | 5 - 15 | 5 - 15 | 5 - 15 | |
| Free Tartaric Acid | 1 - 3 | 1 - 3 | 1 - 3 | 1 - 3 | 1 - 3 |
| Free Fumaric Acid | | | 1 - 3 | | |
| Free Malic Acid | | | | 2 - 5 | |
| Encapsulated Malic Acid¹ | | 3-5 | | | |
| Encapsulated Tartaric Acid² | 3-5 | | | 3-5 | |
| Encapsulated Citric Acid⁶ | | | | | 3-5 |
| Encapsulated Lactic & Malic Acid³ | | 5-15 | | | |
| Encapsulated APM⁴ | | | 0.05 - 1 | | |
| Free Ace-K | | | 0.05 - 1 | | |
| Encapsulated Ace-K & Malic Acid⁵ | | | | 0.5-3 | |

| | | | | | |
|---|---|---|---|---|---|
| ¹Encapsulated malic acid includes 90% malic acid encapsulated in hydrogenated vegetable oil made by spray chilling with an average particle size of 100 microns. ²Encapsulated tartaric acid includes 25% tartaric acid encapsulated in maltodextrin made by spray drying with an average particle size of 50 microns. ³Encapsulated lactic & malic acid includes 75% of a blend of lactic and malic acids encapsulated together in isomalt made by mixing the acid blend into isomalt and allowing the mixture to cool and then grinding to an average particle size of 200 microns. ⁴Encapsulated APM includes 35% aspartame encapsulated in polyvinyl acetate by mixing the APM into molten PVA and extruding the mixture into strands which are chopped to provide an average particle size of 60 microns. ⁵Encapsulated Ace-K and malic acid includes 10% Ace-K and malic acid encapsulated in maltodextrin by mixing the Ace-K and malic acid with a hydrated maltodextrin and extruding the mixture into a bath of alcohol with grinding so that it solidifies into particles with an average particle size of 250 microns. ⁶Encapsulated citric acid includes 90% citric acid encapsulated in hydrogenated vegetable oil made by spray chilling with an average particle size of 100 microns. | | | | | |

Any of the center-fill compositions of Examples A-D are incorporated into any of the gummy candy shell compositions of E-J and then any of the coating compositions of Examples K-O are applied to the exterior. The center-fill is added in an amount from about 5% by weight to about 25% by weight of the total composition. The gummy candy shell is added in an amount from about 70% by weight to about 90% by weight of the total composition and the coating is added in an amount from about 5% by weight to about 15% by weight of the total composition.

The molding composition is prepared by combining components set forth in Examples P-R in Table 4. The amounts are based on weight percent of the total molding composition.

**TABLE 4 - Molding Composition**

| **Components** | **% by weight** | | |
|---|---|---|---|
| | P | Q | R |
| Starch | 50-95 | 50-95 | 100 |
| Sucrose | 5-50 | | |
| Erythritol | | 5-50 | |

Molding compositions P-R can be used to form the gummy shell compositions (with or without center filling). Molding compositions P-R are dry mixed and dried to a desired moisture level and placed in a tray or mold. Impressions of a desired shape are then stamped into the molding composition. Any of the gummy candy shell compositions of E-J are filled into the resulting impression. For example, it may be advantageous to fill gummy candy shell compositions E, F, and I into molds formed by making impressions with molding composition P to aid in the formation of an intrinsic moisture resistant barrier layer. Similarly, it may be advantageous to fill gummy candy shell compositions H and J into molds formed by making impressions with molding composition Q to aid in the formation of an intrinsic moisture resistant barrier layer. After the gummy candy shell reaches the desired firmness, the confectionery or chewing gum base is separated from the molding composition and further processed.

The aqueous wetting syrup is prepared by combining components set forth in Examples S and T in Table 5. The amounts are based on weight percent of the total aqueous wetting syrup composition.

**Table 5: Aqueous Wetting Syrups**

| **Components** | **% by weight** | |
|---|---|---|
| | S | T |
| Dextrin | 5-30 | |
| Sugar | 20-60 | 20-60 |
| Water | 20-60 | 20-60 |
| Water-based Shellac | | 5-60 |
| Hydrocolloid | | 0.01-5 |

The aqueous wetting syrup of Example S is prepared by heating the water to at least 35°C, then adding the dextrin and sugar to the water. The temperature is maintained at about 35°C and the combination of dextrin, sugar and water is mixed until homogenous, creating the wetting syrup. The wetting syrup is then applied to the surface of the confectionery composition by atomized spray. In alternative methods, the syrup may be applied by enrobing based methods, tumbling, dipping and/or painting. The wetted confectionery composition is then dried under ambient or drying conditions until the surface of the wetted confectionery composition reaches a desired tackiness. A coating composition as described above is then applied to the surface of the wetted confectionery. The coated confectionery composition is then dried and packaged.

The aqueous wetting syrup of Example T is prepared by heating the water to about 20°C-80°C, then adding the water-based shellac, sugar and hydrocolloid. The combination of water-based shellac, sugar, hydrocolloid and water is mixed until homogenous, creating the wetting syrup. The wetting syrup is then applied to the surface of the confectionery composition by atomized spray. In alternative methods, the syrup may be applied by enrobing based methods, tumbling, dipping and/or painting. The wetted confectionery composition is then dried under ambient or drying conditions until the surface of the wetted confectionery composition reaches a desired tackiness. A coating composition as described above is then applied to the surface of the wetted confectionery. The coated confectionery composition is then dried and packaged.

The aqueous wetting syrups described herein may be optionally applied to any of the confectionery compositions described above.

The non-aqueous wetting syrup is prepared by combining components set forth in Examples U-X in Table 6. The amounts are based on weight percent of the total non=aqueous wetting syrup composition.

**Table 6: Non-Aqueous Wetting Syrups**

| **Components** | **% by weight** | | | |
|---|---|---|---|---|
| | U | V | W | X |
| Resin | 5-40% | 0 | 0-20% | 0 |
| Fat | 0 | 0-40% | 0-20% | 0-100% |
| Wax | 0 | 0-40% | 0-20% | 0-100% |
| Liquid oil | 60-90% | 0-60% | 0-40% | 0 |
| Water | 0-5% | 0 | 0 | 0 |

The non-aqueous wetting syrups of Examples U-X are prepared by heating the ingredient having the largest % by weight to at least 35°C, then adding the remaining ingredients to the ingredient having the largest % by weight. The temperature is maintained at about 35°C and the combination mixed until homogenous, creating the wetting syrup. The wetting syrup is applied to the surface of the confectionery composition by atomized spray. In alternative methods, the wetting syrup may be applied by enrobing based methods, tumbling, dipping and/or painting. The wetted confectionery composition is then dried under ambient or drying conditions until the surface of the wetted confectionery composition reaches a desired tackiness. A coating composition as described above is then applied to the surface of the wetted confectionery. The coated confectionery composition is then dried and packaged.

A solvent based shellac is also used as a wetting syrup. The wetting syrup is applied to the surface of the confectionery composition by atomized spray. In alternative methods, the wetting syrup may be applied by enrobing based methods, tumbling, dipping and/or painting. The wetted confectionery composition is then dried under ambient or drying conditions until the surface of the wetted confectionery composition reaches a desired tackiness. A coating composition as described above is then applied to the surface of the wetted confectionery. The coated confectionery composition is then dried and packaged.

The non-aqueous wetting syrups described herein may be optionally applied to any of the confectionery compositions described above.

### Example 2: Center-fill Chewing Gum Composition with Particulate Acidic Coating

The center-fill chewing gum composition is prepared by combining the components as set forth in Examples A-D in Table 1 (center fill compositions), with any of the chewing gum compositions of Y-FF in Table 7 (chewing gum region compositions), and K-O in Table 3 (coating compositions).

The gum region composition is prepared by combining the components as set forth in Examples Y-FF in Table 7. The amounts included are based on the weight percent of the total gum region composition.

**Table 5: Gum Region Composition**

| Component | % by weight | | | | | | | |
|---|---|---|---|---|---|---|---|---|
| | Y | Z | AA | BB | CC | DD | EE | FF |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 0 | 50-54 | 52-57 | 45-55 | 47-52 | 0 |
| Sorbitol | 0 | 0-10 | 0 | 0-5 | 0-5 | 5-10 | 0-5 | 0 |
| Lycasin^{™} | 0 | 0 | 0 | 0.25 | 0.25 | 0.25 | 0.25 | 0.25 |
| Erythritol | 0 | 0 | 15-30 | 0 | 0 | 0 | 0 | 0 |
| Sugar | 0 | 0 | 20-40 | 0 | 0 | 0 | 0 | 30-55 |
| Corn Syrup | 0 | 0 | 2-15 | 0 | 0 | 0 | 0 | 0-5 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 3.40 | 3.40 | 3.40 | 3.40 | 3.40 | 3.40 |

| | | | | | | | | |
|---|---|---|---|---|---|---|---|---|
| *gum base may include 3% to 11% by weight of filler such as, for example, talc, dicalcium phosphate, and calcium carbonate (the amount of filler in the gum base is based on the weight percent of the gum region composition, for example, in the above compositions Y-FF, if a gum region composition includes 5% filler, the amount of gum base will be 5% less than the range recited in the table, i.e., from 23-37%) | | | | | | | | |

The compositions for the gum regions are prepared by first combining talc, where present, with the gum base under heat at about 85°C. This combination is then mixed with the bulk sweeteners, lecithin, and sweetener syrups for six minutes. The flavor blends which include a pre-mix of the flavors and cooling agents are added and mixed for 1 minute. Finally, the acids and intense sweeteners are added and mixed for 5 minutes.

Any of the center-fill compositions of Examples A-D are incorporated into any of the chewing gum compositions of Y-FF and then any of the coating compositions of Examples K-O are applied to the exterior. The center-fill is added in an amount from about 5% by weight to about 25% by weight of the total composition. The chewing gum composition is added in an amount from about 70% by weight to about 90% by weight of the total composition and the coating is added in an amount from about 5% by weight to about 15% by weight of the total composition.

The gum region and center-fill compositions are then extruded together and formed into tablets by the process described above in paragraphs [0165] to [0171]. The gum pieces each have a total weight of approximately 2.2g. In the final gum pieces, the gum region is about 62% by weight, the liquid-fill is about 8% by weight, and the coating is about 30% by weight.

The molding compositions or wetting compositions as described above may be optionally applied to any of the chewing gum compositions described above.

### Example 3: CHewing Gum Composition with Acidic Particulate Coating

The chewing gum composition is prepared by combining the components as set forth in GG-NN in Table 8 (chewing gum compositions) and K-O in Table 3 (coating compositions).

The gum composition is prepared by combining the components as set forth in Examples GG-NN in Table 8. The amounts included are based on the weight percent of the total gum region composition.

**Table 8: Chewing Gum Composition**

| Component | % by weight | | | | | | | |
|---|---|---|---|---|---|---|---|---|
| | GG | HH | II | JJ | KK | LL | MM | NN |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 0 | 50-54 | 52-57 | 45-55 | 47-52 | 0 |
| Sorbitol | 0 | 0-10 | 0 | 0-5 | 0-5 | 5-10 | 0-5 | 0 |
| Lycasin^{™} | 0 | 0 | 0 | 0.25 | 0.25 | 0.25 | 0.25 | 0 |
| Erythritol | 0 | 0 | 15-30 | 0 | 0 | 0 | 0 | 0 |
| Sugar | 0 | 0 | 20-40 | 0 | 0 | 0 | 0 | 30-55 |
| Corn Syrup | 0 | 0 | 2-15 | 0 | 0 | 0 | 0 | 2-15 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 1.70 | 3.40 | 3.40 | 3.40 | 3.40 | 0 |

| | | | | | | | | |
|---|---|---|---|---|---|---|---|---|
| *gum base may include 3% to 11% by weight of a filler such as, for example, talc, dicalcium phosphate, and calcium carbonate (the amount of filler in the gum base is based on the weight percent of the gum region composition, for example, in the above compositions Y-FF, if a gum region composition includes 5% filler, the amount of gum base will be 5% less than the range recited in the table, i.e., from 23-37%) | | | | | | | | |

The compositions for the chewing gums are prepared by first combining talc, where present, with the gum base under heat at about 85°C. This combination is then mixed with the bulk sweeteners, lecithin, and sweetener syrups for six minutes. The flavor blends which include a pre-mix of the flavors and cooling agents are added and mixed for 1 minute. Finally, the acids and intense sweeteners are added and mixed for 5 minutes.

Any of the coating compositions of Examples K-O are applied to the exterior of any of the chewing gum compositions of GG-NN as described above. The chewing gum composition is added in an amount from about 85% by weight to about 95% by weight of the total composition and the coating is added in an amount from about 5% by weight to about 15% by weight of the total composition.

The molding compositions or wetting compositions as described above may be optionally applied to any of the chewing gum compositions described above.

## Claims

1. A coating composition comprising: 2.5-13% lactic acid, 1.5-9% tartaric acid, and 0.05-2% fumaric acid by weight of the coating composition.

2. The coating composition of claim 1, wherein said acids have a particle size range of from 25 microns to 710 microns.

3. The coating composition of claim 1 or claim 2, wherein at least one of said lactic acid, tartaric acid and fumaric acid or combinations thereof are encapsulated.

4. The coating composition of claim 3, wherein said encapsulated acid is encapsulated by a water soluble or a water insoluble encapsulating material.

5. The coating composition of any preceding claim, further comprising a saccharide, a polyol, or combinations thereof and wherein said coating composition is in particulate form.

6. The coating composition of claim 5, wherein said saccharide, said polyol, or said combination is in crystalline form.

7. The coating composition of any preceding claim, wherein is the lactic, tartaric and fumaric acids are together present in an amount from 5% to 20% by weight of said coating composition.

8. A confectionery composition comprising:
(a) a first region comprising a confectionery region; and
(b) a second region comprising 2.5-13% lactic acid, 1.5-9% tartaric acid, and 0.05-2% fumaric acid by weight of the coating composition,
wherein said second region at least partially surrounds said first region.

9. The confectionery composition of claim 8, wherein said second region is in particulate form.

10. The confectionery composition of claim 8 or claim 9, wherein the second region is in a particulate form and further comprises at least one encapsulated ingredient.

11. The confectionery composition of any of claims 8, 9 or 10, further comprising an intrinsic moisture resistant barrier layer between said first region and said second region.

12. A method of making a confectionery composition comprising the steps of:
(a) providing a confectionery base composition;
(b) forming said confectionery base composition into a shape having an exterior surface;
(c) providing a coating composition, wherein said coating composition comprises 2.5-13% lactic acid, 1.5-9% tartaric acid, and 0.05-2% fumaric acid by weight of the coating composition; and
(d) applying said coating composition to the exterior surface of said shaped confectionery base composition.

13. The method of claim 12, further comprising the step of forming an intrinsic moisture resistant barrier layer located in between said confectionery base composition and said coating composition.

14. The method of claim 12, further comprising a step of applying a wetting syrup to the exterior surface of said confectionery base composition prior to applying said coating composition to the exterior surface of said shaped confectionery base composition.

## Patentansprüche

1. Beschichtungszusammensetzung umfassend: 2,5-13 Gew.-% Milchsäure, 1,5-9 Gew.-% Weinsäure und 0,05-2 Gew.-% Fumarsäure bezogen auf das Gewicht der Beschichtungszusammensetzung.

2. Beschichtungszusammensetzung nach Anspruch 1, wobei die Säuren eine Teilchengröße im Bereich von 25 Mikrometern bis 710 Mikrometern aufweisen.

3. Beschichtungszusammensetzung nach Anspruch 1 oder Anspruch 2, wobei mindestens eines aus Milchsäure, Weinsäure und Fumarsäure oder Kombinationen derselben verkapselt ist.

4. Beschichtungszusammensetzung nach Anspruch 3, wobei die verkapselte Säure in einem wasserlöslichen oder einem wasserunlöslichen Verkapselungsmaterial verkapselt ist.

5. Beschichtungszusammensetzung nach einem der vorhergehenden Ansprüche, darüber hinaus umfassend ein Saccharid, ein Polyol oder Kombinationen derselben, und wobei die Beschichtungszusammensetzung in Form von Teilchen vorliegt.

6. Beschichtungszusammensetzung nach Anspruch 5, wobei das Saccharid, das Polyol oder die Kombination in kristalliner Form vorliegt.

7. Beschichtungszusammensetzung nach einem der vorhergehenden Ansprüche, wobei die Milch-, Wein- und Fumarsäure insgesamt in einer Menge von 5 Gew.-% bis 20 Gew.-% der Beschichtungszusammensetzung vorliegen.

8. Süßwarenzusammensetzung umfassend:
(a) einen ersten Bereich umfassend einen Süßwarenbereich, und
(b) einen zweiten Bereich umfassend 2,5-13 Gew.-% Milchsäure, 1,5-9 Gew.-% Weinsäure und 0,05-2 Gew.-% Fumarsäure bezogen auf das Gewicht der Beschichtungszusammensetzung,
wobei der zweite Bereich den ersten Bereich zumindest teilweise umgibt.

9. Süßwarenzusammensetzung nach Anspruch 8, wobei der zweite Bereich in Form von Teilchen vorliegt.

10. Süßwarenzusammensetzung nach Anspruch 8 oder Anspruch 9, wobei der zweite Bereich in Form von Teilchen vorliegt und darüber hinaus mindestens einen verkapselten Inhaltsstoff umfasst.

11. Süßwarenzusammensetzung nach einem der Ansprüche 8, 9 oder 10, darüber hinaus eine intrinsische feuchtigkeitsbeständige Trennschicht zwischen dem ersten Bereich und dem zweiten Bereich umfassend.

12. Verfahren zur Herstellung einer Süßwarenzusammensetzung, umfassend die Schritte:
(a) Bereitstellen einer Süßwaren-Basiszusammensetzung,
(b) Formen der Süßwaren-Basiszusammensetzung in eine Form mit einer Außenfläche,
(c) Bereitstellen einer Beschichtungszusammensetzung, wobei die Beschichtungszusammensetzung 2,5-13 Gew.-% Milchsäure, 1,5-9 Gew.-% Weinsäure und 0,05-2 Gew.-% Fumarsäure bezogen auf das Gewicht der Beschichtungszusammensetzung umfasst,
(d) Aufbringen der Beschichtungszusammensetzung auf die Außenfläche der geformten Süßwaren-Basiszusammensetzung.

13. Verfahren nach Anspruch 12, darüber hinaus umfassend den Schritt des Bildens einer intrinsischen feuchtigkeitsbeständigen Trennschicht, die sich zwischen der Süßwaren-Basiszusammensetzung und der Beschichtungszusammensetzung befindet.

14. Verfahren nach Anspruch 12, darüber hinaus umfassend einen Schritt des Aufbringens eines Benetzungssirups auf die Außenfläche der Süßwaren-Basiszusammensetzung vor dem Aufbringen der Beschichtungszusammensetzung auf die Außenfläche der geformten Süßwaren-Basiszusammensetzung.

## Revendications

1. Composition de revêtement comprenant : de 2,5 à 1,3 % d'acide lactique, de 1,5 à 9 % d'acide tartrique et de 0,05 à 2 % d'acide fumarique en poids de la composition de revêtement.

2. Composition de revêtement selon la revendication 1, dans laquelle lesdits acides ont une taille de particule comprise dans la plage allant de 25 µm à 710 µm.

3. Composition de revêtement selon la revendication 1 ou la revendication 2, dans laquelle au moins un desdits acide lactique, acide tartrique et acide fumarique est encapsulé ou des combinaisons de ceux-ci sont encapsulées.

4. Composition de revêtement selon la revendication 3, dans laquelle ledit acide encapsulé est encapsulé par un matériau d'encapsulation soluble dans l'eau ou insoluble dans l'eau.

5. Composition de revêtement selon l'une quelconque des revendications précédentes, comprenant en outre un saccharide, un polyol ou une combinaison de ceux-ci et dans laquelle ladite composition de revêtement est sous une forme particulaire.

6. Composition de revêtement selon la revendication 5, dans laquelle ledit saccharide, ledit polyol ou ladite combinaison est sous une forme cristalline.

7. Composition de revêtement selon l'une quelconque des revendications précédentes, dans laquelle les acides lactique, tartrique et fumarique sont présents ensemble en une quantité de 5 % à 20 % en poids de ladite composition de revêtement.

8. Composition de confiserie comprenant :
(1) une première région comprenant une région de confiserie ; et
(b) une seconde région comprenant de 2,5 à 13 % d'acide lactique, de 1,5 à 9 % d'acide tartrique et de 0,05 à 2 % d'acide fumarique en poids de la composition de revêtement,
dans laquelle ladite seconde région entoure au moins partiellement ladite première région.

9. Composition de confiserie selon la revendication 8, dans laquelle ladite seconde région est sous une forme particulaire.

10. Composition de confiserie selon la revendication 8 ou la revendication 9, dans laquelle la seconde région est sous une forme particulaire et comprend en outre au moins un ingrédient encapsulé.

11. Composition de confiserie selon la revendication 8, 9 ou 10, comprenant en outre une couche barrière résistant à l'humidité intrinsèque entre ladite première région et ladite seconde région.

12. Procédé de fabrication d'une composition de confiserie comprenant les étapes consistant à :
(a) utiliser une composition de confiserie de base ;
(b) transformer ladite composition de confiserie de base en une forme ayant une surface externe ;
(c) utiliser une composition de revêtement, ladite composition de revêtement comprenant de 2,5 à 13 % d'acide lactique, de 1,5 à 9 % d'acide tartrique et de 0,05 à 2 % d'acide fumarique en poids de la composition de revêtement ; et
(d) appliquer ladite composition de revêtement sur la surface externe de ladite composition de confiserie de base façonnée.

13. Procédé selon la revendication 12, comprenant en outre l'étape consistant à former une couche barrière résistant à l'humidité intrinsèque située entre ladite composition de confiserie de base et ladite composition de revêtement.

14. Procédé selon la revendication 12, comprenant en outre une étape consistant à appliquer un sirop de mouillage sur la surface externe de ladite composition de confiserie de base avant l'application de ladite composition de revêtement sur la surface externe de ladite composition de confiserie de base façonnée.
